# EUROPÄISCHE PATENTANMELDUNG

(11) **EP 2 471 594 A1**
(43) Veröffentlichungstag der Anmeldung: **04.07.2012**
(21) Anmeldenummer: 10197281.8
(22) Anmeldetag: 29.12.2010
(51) Int. Cl.: B01J 19/18, B01J 19/20, C08F 2/01

(54) **Reaktor und Verfahren zur kontinuierlichen Polymerisation**

(71) Anmelder: LANXESS International SA, 1763 Granges-Paccot (CH)
(72) Erfinder: Die Erfindernennung liegt noch nicht vor
(74) Vertreter: Deblon, Jörg-Stephan

(57) **Zusammenfassung**

Die vorliegende Erfindung betrifft einen Reaktor (10) und ein Verfahren zur kontinuierlichen Polymerisation, wobei der Reaktor (10) ein im Wesentlichen rohrförmiges Reaktorgehäuse (16) aufweist. Das Reaktorgehäuse (16) weist einen in Strömungsrichtung (22) entlang der geometrischen Mittelachse (12) verlaufenden Antrieb (38) auf, der als Mittelwelle ausgestaltet ist. Innerhalb des Reaktorgehäuses (16) ist ein drehbar angeordneter Schaber oder Wischer (36) vorgesehen, wobei der Schaber oder Wischer (36) mindestens ein Schaber- bzw. Wischerblatt (42) zum Entlanglaufen an einer Innenseite (44) des Reaktorgehäuses (16) aufweist. Durch die Drehbewegung des Schabers oder Wischers (36) wird eine radiale Vermischung einer Strömung innerhalb des Reaktorgehäuses (16) erreicht, die Schwerkrafteffekte dominiert und durch Formgebung der Schaber oder Wischer wahlweise eine Kolben- oder eine Schlaufen- bzw. Rückströmung innerhalb des Reaktors (10) oder auch über einen zusätzlichen externen Umpumpkreislauf (23) ermöglicht. Dies erlaubt es die Reaktionsbedingungen in axialer Richtung des Reaktorgehäuses (16) vorherzusagen und individuell geeignete Reaktionsbedingungen entlang des Reaktorgehäuses einzustellen und zu kontrollieren, so dass sich insbesondere eine gewünschte Molekulargewichtsverteilung einstellen lässt.

## Beschreibung

Die vorliegende Erfindung betrifft einen Reaktor, insbesondere einen Rohrreaktor, dessen Einsatz in einem Verfahren zur kontinuierlichen Herstellung von Polymeren wie insbesondere synthetischen Kautschuken, sowie das vorgenannte Verfahren selbst.

Aus US 4,282,925 ist ein Wärmetauscher bekannt, der ein im Wesentlichen rohrförmiges Gehäuse mit einer vertikal verlaufenden Mittelwelle aufweist. Der Wärmetauscher weist einen Schaber auf, der mit Hilfe von Schaberblättern an einer Innenseite des Gehäuses entlangläuft.

Nachteilig bei einem derartigen Wärmetauscher ist, dass er nur schlecht als Rohrreaktor für eine kontinuierliche Polymerisation verwendet werden kann, da sich die Reaktionsbedingungen nur sehr schlecht kontrollieren und beeinflussen lassen. Insbesondere ist es kaum möglich, eine gewünschte Molekulargewichtsverteilung einstellen zu können.

Aus US 3,820,960 ist ein Polymerisationsreaktor bekannt, der ein im Wesentlichen rohrförmiges Gehäuse mit einer im Inneren des Reaktorgehäuses rotierenden Rührtrommel aufweist, deren Oberfläche mit Schaufelblättern ausgestattet ist, um eine Vermischung von Reaktanden zu fördern und die im Inneren mit einer Gamma-Strahlungsquelle ausgestattet ist.

Nachteilig an vorgenanntem Reaktor ist die Tatsache dass die Entnahme von Produkt insbesondere bei viskoelastischen Materialien wie insbesondere synthetischen Kautschuken nur unvollständig oder ungleichmäßig erfolgt

Es ist die Aufgabe der Erfindung, einen Reaktor sowie ein Verfahren zur kontinuierlichen Polymerisation zu schaffen, mit deren Hilfe die Reaktionsbedingungen der Polymerisation besser beeinflusst werden können und insbesondere die Einstellung einer gewünschten Molekulargewichtsverteilung insbesondere durch Kontrolle der Verweilzeit erleichtert werden kann.

Die Lösung der Aufgabe erfolgt erfindungsgemäß durch einen Reaktor zur kontinuierlichen Herstellung von Polymeren, insbesondere synthetischen Kautschuken, umfassend zumindest ein im Wesentlichen rohrförmiges Reaktorgehäuse, wobei das Reaktorgehäuse zumindest
• einen Antrieb aufweist, der mit zumindest einem innerhalb des Reaktorgehäuses drehbar angeordneten Schaber oder Wischer verbunden ist und wobei der Schaber oder Wischer mindestens ein Schaber- bzw. Wischerblatt zum Entlanglaufen an einer Innenseite des Reaktorgehäuses aufweist
• zumindest einen Einlass
• zumindest einen Auslass.

Ein weiterer Gegenstand der Erfindung ist ein Verfahren zur Herstellung von Polymeren, insbesondere synthetischen Kautschuken unter Verwendung des vorgenannten und in nachstehenden Ausgestaltungsformen beschriebenen Reaktors.

Der erfindungsgemäße Reaktor zur kontinuierlichen Polymerisation, der insbesondere zur Herstellung von synthetischen Kautschuken durch Polymerisation verwendet werden kann, umfasst zumindest ein im Wesentlichen rohrförmiges Reaktorgehäuse, wobei das Reaktorgehäuse einen Antrieb aufweist, der mit zumindest einem innerhalb des Reaktorgehäuses drehbar angeordneten Schaber oder Wischer verbunden ist und wobei der Schaber oder Wischer mindestens ein Schaber- bzw. Wischerblatt zum Entlanglaufen an einer Innenseite des Reaktorgehäuses aufweist.

Ergänzend sei angemerkt, dass im Rahmen der Erfindung auch solche Elemente vom Begriff Schaber oder Wischer eingeschlossen sind, die im Betrieb einen Winkel zur Innenseite des Reaktorgehäuses von genau 90° einnehmen also formal sowohl schaben als auch wischen.

Der Abstand des Schaber- oder Wischerblattes zur Innenseite des Reaktorgehäuses beträgt beispielsweise 0 oder mehr als 0 bis 2 %, vorzugsweise 0 oder mehr als 0 bis 1 % bezogen auf den radialen Durchmesser des Reaktorgehäuses. In einer Ausführungsform in der der Abstand des Schaber- oder Wischerblattes zur Innenseite des Reaktorgehäuses 0 % beträgt, d.h. in der Kontakt zwischen Schaber- oder Wischerblatt und der Innenseite des Reaktorgehäuses besteht wird die Innenseite des Reaktorgehäuses vollständig geschabt und damit ein guter Wärmeübergang vom Reaktionsmedium über das Reaktorgehäuse zum Kühlmedium sichergestellt, da die Ausbildung von Polymerbelägen, auch Gele, genannt, effektiv vermieden werden kann. Auch bei den oben genannten Abständen des Schaber- oder Wischerblattes zur Innenseite des Reaktorgehäuses in einer alternativen Ausführungsform bleibt der gute Wärmeübergang bestehen. Vorteilhaft an dieser Ausführungsform ist der Umstand, dass geringere mechanische Kräfte auf Schaber bzw. Wischer durch die Umlaufbewegung wirken, was deren Lebenszeit verlängert.

Der Antrieb kann dabei beispielsweise als Welle ausgestaltet sein, wobei die Welle beispielsweise als im Wesentlichen entlang der geometrischen Mittelachse verlaufende Mittelwelle oder als dezentrale Welle ausgestaltet sein kann. Im Sinne der Erfindung bedeutet eine dezentrale Welle beispielsweise eine Welle, die einen um die geometrische Mittelachse des Reaktors drehbar gelagerten Käfig oder ein entsprechendes Gestänge aufweist, wobei der Käfig oder das Gestänge zumindest einen innerhalb des Reaktorgehäuses drehbar angeordneten Schaber aufweist und wobei zumindest teilweise, vorzugsweise zumindest überwiegend eine entlang der geometrischen Mittelachse verlaufende Mittelwelle nicht vorhanden ist.

Die Wellen können gegebenenfalls selbst kühlbar sein oder Mittel aufweisen, mit denen Edukte über die Welle in den Innenraum des Reaktorgehäuses geleitet werden können.

Zur Unterstützung des Wärmetransportes und der radialen sowie axialen Vermischung kann die Innenseite des Reaktorgehäuses zumindest einen, bevorzugt 2 bis 16, und besonders bevorzugt 2 bis 8 Statoren aufweisen, die als Stromstörer wirken und die Rotation des Reaktorinhalts vermindern.

Der Reaktor weist zumindest einen Auslass auf.

In einer bevorzugten Ausführungsform ist der Auslass derart gestaltet, dass die Auslassöffnung im Wesentlichen tangential zur Umlaufrichtung des Antriebs insbesondere einer Mittelwelle angeordnet ist. Im Betrieb ist die Umlaufrichtung dann so zu wählen dass die Auslassöffnung der Umlaufrichtung entgegengerichtet ist, damit durch die Umlaufbewegung der Welle bzw. der Schaber und Wischer Reaktionsmedium enthaltend das Produkt, insbesondere synthetische Kautschuke, in die Auslassöffnung gefördert wird.

Vorzugsweise bedeutet im Wesentlichen tangential, dass die Querschnittsebene der Auslassöffnung innerhalb des Reaktorgehäuses mit der geometrischen Mittelachse des Reaktorgehäuses einen Winkel γ von maximal 45°, vorzugsweise maximal 30°, besonders bevorzugt zwischen 0 und 20° und mit dem Radius, d.h. der kürzesten Verbindungslinie zwischen der geometrischen Mittelachse und dem im Wesentlichen rohrförmigen Reaktorgehäuse einen Winkel δ von maximal 45°, vorzugsweise maximal 30°, besonders bevorzugt zwischen 0 und 20° einschließt.

Je nach den eingesetzten Edukten, den Viskositäten und der Morphologie des bei der Polymerisation des gebildeten Gels ist der Auslass dann in radialer Richtung eher in der Nähe der geometrischen Mittelachse oder in der Nähe der Innenseite des Reaktorgehäuses angebracht. Die optimale radiale Anbringung ist durch wenige Versuche leicht zu bestimmen oder zu berechnen. Insbesondere bei Einsatz einer Mittelwelle und bei Herstellung von synthetischen Kautschuken ist es bevorzugt, den Auslass so anzubringen dass der geometrische Schwerpunkt der Auslassöffnung in radialer Richtung näher an der äusseren Begrenzung der Mittelwelle als an der Innenseite des Reaktorgehäuses liegt.

Der besondere Vorzug eines wie vorstehend geschildert gestalteten Auslasses ist der Umstand, dass auch hochviskose Medien mit Tendenz zur Gelbildung verlässlich aus dem Reaktorinnenraum gefördert werden ohne dass es zu einer Akkumulation oder aufgrund von Trägheitseffekten zur Größenklassierung von Gelpartikeln kommt, die im schlimmsten Fall im Laufe der Zeit den kontinuierlichen Polymerisationsprozess zum Erliegen bringen können.

Der zumindest eine Auslass ist vorzugsweise nahe der in Strömungsrichtung hinteren Stirnplatte des Reaktors angebracht vorzugsweise in Strömungsrichtung in den letzten 5 % bezogen auf die Distanz zwischen den beiden Stirnplatten des Reaktors.

Der Reaktor kann auch mehrere Auslässe, zum Beispiel 2 oder 3 aufweisen, wobei in diesem Fall vorzugsweise für mehrere Auslässe die oben beschriebenen Ausgestaltungsformen völlig analog gelten.

In einer weiteren Ausführungsform weist der Reaktor auf:
• eine zumindest überwiegend entlang der geometrischen Mittelachse verlaufende
   Mittelwelle, die vorzugsweise kühlbar ist
   oder, bevorzugt jedoch und
• Statoren, die so gestaltet sind, dass sie einen Abstand von der Mittelwelle von beispielsweise 0 oder mehr als 0 bis 2 %, vorzugsweise 0 oder mehr als 0 bis 1 % bezogen auf den radialen Durchmesser des Reaktorgehäuses besitzen.

Unter Statoren sind im Rahmen der Erfindung feststehende, unbewegliche, mit der Innenseite des Reaktorgehäuse verbundene Einbauten, wie beispielsweise Bleche oder Platten zu verstehen, die beispielsweise einen Winkel zur geometrischen Mittelachse von 0 bis 90°, vorzugsweise von 0 bis 60°, besonders bevorzugt 0 bis 50° aufweisen.

Sofern im Rahmen der Erfindung Winkel mit einem bestimmten Wert genannt werden, so schließt dies ohne Angabe einer abweichenden Definition immer den Winkel in beiden

Richtungen ein, der vorgenannte Winkel zur geometrischen Mittelachse von 90° umfasst folglich einen Winkelbereich von 180° (-90° bis + 90°).

Analog zu den Schabern und Wischern bzw. den Schaber- oder Wischerblättern können die Statoren so ausgeführt sein, dass sie die Mittelwelle schaben oder wischen. Der Abstand des Stators zur Welle beträgt dann beispielsweise 0 oder mehr als 0 bis 2 %, vorzugsweise 0 oder mehr als 0 bis 1 % bezogen auf den radialen Durchmesser des Reaktorgehäuses.

In einer weiteren Ausführungsform ist der Reaktor, insbesondere ein Rohrreaktor nicht stehend, sondern liegend, das heißt mit im Wesentlichen horizontaler geometrischer Mittelachse des Reaktorgehäuses angeordnet. Dadurch können schwerkraftbedingte Strömungen in und entgegen der Strömungsrichtung vermieden werden. Grundsätzlich ist aber jede Neigung und Ausrichtung denkbar. Unter im wesentlichen horizontaler geometrischer Mittelachse ist eine Achse zu verstehen, die maximal 10°, vorzugsweise weniger als 5° von der horizontalen Ausrichtung abweicht. Gleiches gilt bezüglich analog für den Begriff im Wesentlichen vertikal.

Erfindungsgemäß ist es möglich, unterschiedliche Strömungsgeschwindigkeiten in Strömungsrichtung zu vermeiden oder zumindest deutlich zu reduzieren. Insbesondere kann in einigen Ausführungsformen eine Schlaufenströmung vermieden werden. Dies ermöglicht es, in Strömungsrichtung entlang des Reaktorgehäuses unter Berücksichtigung der Verweilzeit der Strömung innerhalb des Reaktorgehäuses und der Reaktionskinetik die lokalen Reaktionsverhältnisse vorherzusagen. So ist es beispielsweise möglich lokale Edukt-Konzentrationen, Produkt-Konzentrationen sowie entstehender Reaktionswärmen entlang des Reaktorgehäuses bereits im Vorfeld zu berechnen. Aufgrund der genaueren Kenntnisse der unterschiedlichen Reaktionssituationen entlang des Strömungsweges ist es möglich, lokal unterschiedliche Maßnahmen einzuleiten, um die Polymerisationsreaktion zu beeinflussen. Beispielsweise ist es möglich, einen Teilbereich des Reaktorgehäuses zu identifizieren, wo mit einer besonders hohen Reaktionstätigkeit zu rechnen ist, die zu einer entsprechend hohen Wärmeentwicklung (exotherme Reaktion) oder einem entsprechend hohen Wärmebedarf (endotherme Reaktion) zu rechnen ist. Speziell in diesem Bereich kann mit Hilfe eines Wärmetauschers ein entsprechend großer Wärmetransport zwischen der Strömung innerhalb des Reaktorgehäuses und einem Wärmetauschermedium eingestellt werden, um eine optimale Reaktionstemperatur beibehalten zu können. Gleichzeitig kann vermieden werden, dass in Bereichen, in denen, sofern überhaupt, nur geringe Temperaturänderungen der Strömung zu erwarten sind, ein zu großer Wärmeaustausch vorgehalten wird. Dadurch kann in einer energieeffizienten Weise gezielt an entsprechend relevanten Stellen Einfluss auf die Reaktionsbedingungen genommen werden, um insbesondere einen gewünschten Temperaturverlauf und dadurch eine geeignete Molekulargewichtsverteilung des Polymerisationsproduktes zu erreichen. Die Reaktionsbedingungen der Polymerisation können besser kontrolliert und beeinflusst werden und die Einstellung einer gewünschten Molekulargewichtsverteilung hinsichtlich Lage, Breite und Form ist erleichtert.

Alternativ dazu ist es weiterhin auch möglich, eine sogenannte Schlaufenströmung oder Umlaufströmung mit Rückvermischung durch axial wirkende Schaber bzw. Wischer und/oder Statoren zu erzeugen. Hierbei werden durch Neigung oder Ausgestaltung der Schaber bzw. Wischer und/oder Statoren gezielte Axialgeschwindigkeiten an der Innenseite des Reaktors und/oder der Wellenoberfläche erzeugt. Die Schaber bzw. Wischer und/oder Statoren werden hierzu in geeigneter, dem Fachmann in an sich bekannter Weise Art geformt oder ausgerichtet. Beispielsweise führt eine leichte Anstellung von Statoren, Schabern oder Wischern gegen die geometrische Mittelachse des Reaktorgehäuses zur Aufprägung von Axialgeschwindigkeiten. Der Winkel der Anstellung zur geometrischen Mittelachse beträgt in dieser Ausführungsform beispielsweise 5 bis 60°, vorzugsweise 10 bis 50°.

In einer wahlweise alternativen oder weiteren Ausführungsform ist der Reaktor mit einem externen Umpumpkreislauf zur Erhöhung der Axialgeschwindigkeit ausgeführt, wobei der Umpumpkreislauf über einen Kreislaufauslass und einen Kreislaufeinlass mit dem Reaktorgehäuse verbunden ist und ein Förderorgan aufweist.

Das zur Förderung des Reaktionsmediums verwendete Förderorgan ist beispielsweise eine Pumpe, Der spezifische Leistungseintrag liegt beispielsweise bei P/V = 1 bis 1000 W/L. Der Umpumpkreislauf ist vorzugsweise kühlbar.

In einer weiteren Ausführungsform weist das Förderorgan gleichzeitig Dispergierelemente auf, um im umgepumpten Reaktionsmedium vorhandene Gelpartikel zerkleinern zu können. In einer solchen Ausführungsform weist das Förderorgan, beispielsweise eine Kreiselpumpe, mindestens eine, vorzugsweise mindestens zwei Rotor-Zahnreihen und mindestens eine, vorzugsweise mindestens zwei Stator-Zahnreihen mit unterschiedlichen, vorzugsweise kleiner werdenden Spaltmaßen auf. Weiterhin weist das Förderorgan z.B. einen axialen Ansaugstutzen direkt am Kreislaufauslass auf.

Auf diese Weise können bei der erfindungsgemäßen Herstellung von Polymeren durch Polymerisation von polymerisierbaren Monomeren anfallende Feststoffe oder Gele auf

Partikelgrößen von weniger als 1 mm, besonders bevorzugt von weniger als 0,1 mm zerkleinert werden.

In einer weiteren Ausführungsform ist der zumindest eine Auslass ebenfalls mit Dispergierelementen ausgestaltet, wobei die oben genannten Ausführungsformen für die Dispergierelemente in gleicher Weise auch hierfür gelten.

Erfindungsgemäß wird durch den Schaber bzw. den Wischer weiterhin vermieden, dass sich Ablagerungen, wie Verkrustungen, Anbackungen, Polymergele oder ähnliches an der Innenseite des Reaktorgehäuses bilden, die in einer unkontrollierbaren Art und Weise den Wärmeübergang über das Reaktorgehäuse beeinflussen. Zusätzlich führt die rotatorische Bewegung des Schabers und der Bewegung des Schaberblatts in Umfangsrichtung zu einer zusätzlichen Vermischung in radialer Richtung. Die gegebenenfalls an der Innenseite des Reaktorgehäuses fixierten Statoren unterstützen die Vermeidung von Ablagerungen durch ihre redispergierende Wirkung im Zusammenspiel mit den Schabern bzw. Wischern. Entlang der Mittelachse des Reaktorgehäuses können sich somit für jeden einzelnen Abschnitt im Wesentlichen homogene Reaktionsbedingungen ergeben. Gleichzeitig wird die Ausbildung von Strömungsgrenzschichten an der Innenseite des Reaktorgehäuses verhindert und der Wärmeübergang aufgrund der Strömungen in radialer Richtung deutlich verbessert. Durch die Drehbewegung des Schabers wird eine radiale Vermischung einer Strömung innerhalb des Reaktorgehäuses erreicht, die Schwerkrafteffekte dominiert, und wahlweise eine Kolben- oder Schlaufenströmung bis hin zur vollständig rückvermischten Strömung innerhalb des Rohrreaktors ermöglicht. Dies erlaubt es, die Reaktionsbedingungen in axialer Richtung des Reaktorgehäuses vorherzusagen und individuell geeignete Reaktionsbedingungen entlang des Reaktorgehäuses einzustellen und zu kontrollieren, so dass sich insbesondere eine gewünschte Molekulargewichtsverteilung einstellen lässt. Bei Einstellung einer Schlaufenströmung ergibt sich weiterhin der Vorteil, dass an den Eintrittsstellen der Edukte, wie insbesondere des Katalysators, durch die infolge der Schlaufenströmung eintretende Verdünnung, Hotspots bei der Polymerisation vermieden werden können.

Besonders bevorzugt ist das Reaktorgehäuse mit einer Fördereinrichtung zum Fördern von Edukten in das Reaktorgehäuse und/oder zum Fördern von Produkten aus dem Reaktorgehäuse verbunden, wobei die Förderleistung der Fördereinrichtung derart eingestellt ist, dass sich innerhalb des Reaktorgehäuses im Wesentlichen eine Kolbenströmung ausbildet. Durch die Kolbenströmung werden Rückvermischungen entgegen der Strömungsrichtung vermieden. Die Kolbenströmung kann dadurch ausgebildet werden, dass die Fördereinrichtung die Strömung entlang der geometrischen Mittelachse des Reaktorgehäuses durch das Reaktorgehäuse saugt und/oder drückt. Aufgrund des Schabers, der die Ausbildung von Grenzschichten an der Innenseite des Reaktorgehäuses verhindert, ist für die Kolbenströmung eine vergleichsweise geringe Strömungsgeschwindigkeit ausreichend. Dadurch lassen sich vergleichsweise hohe Verweilzeiten der Strömung im Rohrreaktor erreichen, ohne das kolbenförmige Profil der Strömung zu beeinträchtigen.

Unter Edukten werden die in den Rohrreaktor eintretenden Stoffe verstanden, während unter Produkten die aus den Rohrreaktor austretenden Stoffe verstanden werden. Beispiele für Edukte sind die zur Herstellung von synthetischen Kautschuken eingesetzte Monomere oder Monomergemische, die gegebenenfalls zur Polymerisation erforderlichen Katalysatoren sowie Lösungsmittel und gegebenenfalls Zuschlagsstoffe.

Der Reaktor weist zumindest einen Einlass auf.

Die Edukte können hierbei über einen gemeinsamen Einlass oder über mehrere unterschiedliche Einlässe insbesondere an verschiedenen axialen oder tangentialen Positionen in das Reaktorgehäuse des Rohrreaktors eingeleitet werden.

In einer bevorzugten Ausführungsform weist der erfindungsgemäße Reaktor zumindest zwei Einlässe auf, wobei der erste Einlass von einem weiteren Einlass in axialer Richtung mindestens 5 %, vorzugsweise 10 bis 45 % und besonders bevorzugt 10 bis 40 % bezogen auf die axiale Weglänge vom in Strömungsrichtung ersten Einlass bis zum in Strömungsrichtung ersten Auslass innerhalb des Reaktorgehäuses entfernt angeordnet ist.

In einer weiteren Ausführungsform sind der erste Einlass und der weitere Einlass zusätzlich in Umfangsrichtung um mindestens 60°, vorzugsweise mindestens 90° und ganz besonders bevorzugt 180° versetzt. Das gilt auch dann wenn der erste Einlass in nicht zentraler Position in der Stirnplatte angeordnet ist.

Bei der Verfahrensführung ist es dann bevorzugt über den ersten Einlass beispielsweise den Katalysator oder eine Mischung aus Katalysator und Lösungsmittel dem Reaktor zuzuführen und über den zweiten Einlass das oder die Monomere oder eine Mischung aus dem oder den Monomeren und Lösungsmittel. Auch die umgekehrte Reihenfolge ist möglich aber nicht bevorzugt.

Die Zugabe über die in axialer und gegebenenfalls zusätzlich radialer Richtung voneinander getrennten Einlässe bewirkt, dass durch die in Strömungsrichtung vorgeschaltete

Vermischung des Katalysators im Reaktionsmedium hohe lokale Konzentration von Katalysator bei Monomerzuführung und damit eine extensive Gelbildung vermieden wird.

Die Erfindung umfasst auch Ausführungsformen in denen der Reaktor mehr als zwei Einlässe aufweist. Vorzugsweise gelten auch für diesen Fall die oben genannten Anforderungen in Bezug auf die axiale Ausrichtung des ersten und zumindest eines weiteren Einlasses völlig analog.

Sofern mehr als zwei Einlässe existieren sind sie vorzugsweise zusätzlich in Umfangsrichtung möglichst weit gegeneinander versetzt, bei drei Einlässen dann vorzugsweise mindestens 100°, vorzugsweise 120°.

Vorzugsweise ist die Drehgeschwindigkeit und Form des Schabers bzw. Wischers derart eingestellt, dass wahlweise in einem axialen Teilbereich des Reaktorgehäuses durch das Schaberblatt nur eine Geschwindigkeitskomponente in radialer Richtung und/oder in Umfangsrichtung auf eine Strömung im Reaktorgehäuse aufprägbar ist. Beispielsweise ist im gesamten vom Schaber- oder Wischerblatt überstrichenen Bereich des Reaktorgehäuses durch das Schaber- oder Wischerblatt nur eine Geschwindigkeitskomponente in radialer Richtung und/oder in Umfangsrichtung auf eine Strömung im Reaktorgehäuse aufprägbar. Hierzu ist das Schaber- oder Wischerblatt im Wesentlichen senkrecht zu seiner Bewegung in Umfangsrichtung ausgerichtet, um über den Leistungseintrag des Schabers oder Wischers keine zusätzliche Geschwindigkeitskomponente in oder entgegen der Strömungsrichtung des Rohrreaktors aufzuprägen. Das Schaber- oder Wischerblatt kann im Wesentlichen parallel zur geometrischen Mittelachse des Reaktorgehäuses ausgerichtet sein. Gleichzeitig ist die Drehgeschwindigkeit des Schabers oder Wischers derart eingestellt, dass zu starke Turbulenzen, die signifikante Geschwindigkeitskomponenten entlang der Strömungsrichtung verursachen können, vermieden werden. Dadurch ergibt sich in Strömungsrichtung ein kalkulierbarer Verlauf der Reaktionsbedingungen, der bei einer kontinuierlichen Durchströmung des Reaktors relativ zum Reaktorgehäuse konstant bleibt. Sofern der Reaktor Statoren aufweist, sind in dieser Ausführungsform die Statoren ebenfalls im Wesentlichen parallel zur geometrischen Mittelachse des Reaktorgehäuses ausgerichtet, um axiale Geschwindigkeitskomponenten zu vermeiden.

In einer weiteren Ausführungsform ist im gesamten vom Schaber- oder Wischerblatt überstrichenen Bereich des Reaktorgehäuses durch das Schaber- oder Wischerblatt eine Geschwindigkeitskomponente sowohl in radialer Richtung und/oder in Umfangsrichtung als auch in axialer Richtung auf eine Strömung im Reaktorgehäuse aufprägbar. Das Schaber- oder Wischerblatt kann dann zur geometrischen Mittelachse des Reaktorgehäuses geneigt sein, wobei beispielsweise ein Winkel zur geometrischen Mittelachse von mehr als 0 bis 60°, vorzugsweise von 5 bis 60°, besonders bevorzugt 10 bis 50° eingeschlossen wird.

Sofern der Reaktor Statoren aufweist, sind in dieser Ausführungsform die Statoren entweder im Wesentlichen parallel zur geometrischen Mittelachse des Reaktorgehäuses ausgerichtet oder weisen ebenfalls eine Neigung auf, wodurch axiale Geschwindigkeitskomponenten verstärkt werden können.

In einer bevorzugten Ausführungsform sind in axialer Richtung des Reaktorgehäuses mindestens zwei, vorzugsweise mindestens drei oder mindestens vier, Wärmetauscher zur Einstellung einer Temperatur einer innerhalb des Reaktorgehäuses vorgesehenen Strömung angeordnet, wobei die Wärmetauscher derart voneinander getrennt sind, dass für jeden Wärmetauscher eine unterschiedliche Temperatur einstellbar ist. Die Temperatur der Strömung innerhalb des Reaktorgehäuses kann von außerhalb des Reaktorgehäuses über die jeweiligen Wärmetauscher beeinflusst und eingestellt werden. In Abhängigkeit von dem zu erwartenden Verlauf der Reaktionsbedingungen innerhalb des Reaktorgehäuses kann für jeden Wärmetauscher individuell eine geeignete Temperatur gewählt werden, um beispielsweise unter Berücksichtigung der zu erwartenden Reaktionswärme eine konstante Temperatur innerhalb des Reaktorgehäuses vorzusehen.

An den Rändern von Zonen mit unterschiedlichen Wandtemperaturen können vorzugsweise Schaber oder Wischer eingesetzt werden, die vor allem radiale bzw. tangentiale Geschwindigkeitskomponenten aufprägen, so dass die unterschiedlich temperierten Reaktionszonen zusätzlich vermischt werden. Es können auch Wärmetauscher in Reihe geschaltet werden, um den gesamten Massenstrom oder einen Teil des Massenstroms des einen Wärmetauschers dem anderen Wärmetauscher zuzuführen. Der andere Wärmetauscher kann insbesondere einen weiteren Zulauf zur Zufuhr eines Wärmetauschermedium mit einer von dem zugeführten Massenstrom des ersten Wärmetauschers verschiedenen Temperatur aufweisen. Trotz sich dynamisch ändernder Reaktionsbedingungen entlang des Strömungsweges innerhalb des Reaktorgehäuses kann somit die Temperatur innerhalb des Reaktorgehäuses im Wesentlichen konstant gehalten werden. Dies ermöglicht die Erreichung einer beabsichtigten Molekulargewichtsverteilung, die eine vergleichsweise geringe Streuung aufweist. Beispielsweise kann bei der Herstellung von synthetischen Kautschuken, die typischerweise bei -100 bis -30°C erfolgt, mit Hilfe von verdampfendem Ethylen oder anderen bei vorgenannten Temperaturen verdampfbaren Flüssigkeiten in Abhängigkeit vom gewählten Druck jede gewünschte Temperatur innerhalb des vorgenannten Bereichs eingestellt werden. Alternativ können unterschiedlich temperierte flüssige Kühlmittel eingesetzt werden.

In einer weiteren Ausführungsform wird das Kühlmittel einphasig, d.h. ohne Verdampfung betrieben. Daraus resultiert eine Temperaturerhöhung zwischen Kühlmittelein- und austritt. Der Vorteil dieser Variante ist der konstantere und definierbarere Wärmeaustausch auf der Kühlmittelseite durch Bereitstellen entsprechender Fördermengen nicht siedenden Fluides mithilfe handelsüblicher Pumpen. Die eingesetzten Kühlmittel sind auch hier Ethylen, Ethan, Propylen, Propan, Butan, Isobutan, Mischungen aus den vorgenannten Kühlmittel sowie weitere dem Fachmann bekannte Wärmeträgerfluide.

In einer weiteren Ausführungsform kann der Rohrreaktor zwei oder mehr jeweils über eine Zwischenplatte getrennte, aber über Durchtrittsöffnungen kommunizierende Reaktionsräume aufweisen, wobei in diesem Fall pro Reaktionsraum in axialer Richtung des Reaktorgehäuses mindestens ein, vorzugsweise mindestens zwei Wärmetauscher zur Einstellung einer Temperatur innerhalb jedes Reaktionsraumes angeordnet sind.

Ist der Reaktor, insbesondere der Rohrreaktor horizontal ausgerichtet ergibt sich zusätzlich für die verdampfende Flüssigkeit, wie beispielsweise Ethylen auch aufgrund des auftretenden hydrostatischen Drucks eine vergleichsweise schmale Sprudelschicht, so dass sich für den Wärmetauscher ein noch höherer Wärmeübergangseffizient erreichen lässt.

Das Reaktorgehäuse kann aus allen dem Fachmann bekannten Materialen gefertigt sein, die unter den Reaktionsbedingungen eine ausreichende Festigkeit und Korrosionsbeständigkeit besitzen und behalten wie zum Beispiel handelsüblicher Stahl. Im Fall von Tieftemperaturanwendungen z.B. bei -100° bis - 30°C sind ist beispielsweise austenitischer Stahl geeignet.

Bevorzugt ist das Reaktorgehäuse aus Edelstahl 1.4571 oder ähnlichen in der chemischen Industrie gebräuchlichen und beständigen Stählen gefertigt.

Vorzugsweise besteht die Innenseite des Reaktorgehäuses, die mit dem Reaktionsmedium in Kontakt kommt, aus Edelstahl 1.4404 mit reduziertem Ti-Anteil für bessere Poliereigenschaften der Innenfläche.

Vorzugsweise weist der Wärmetauscher einen ein Teil des Reaktorgehäuses umschließenden Außenmantel auf, wobei vorzugsweise zwischen dem Außenmantel und dem Reaktorgehäuse eine spiralförmige Trennwand zur Ausbildung eines spiralförmigen Wärmetauscherkanals angeordnet ist. Durch eine konstruktiv einfache umzusetzende Maßnahme, lässt sich erreichen, dass ein Wärmetauschermedium spiralförmig an dem Reaktorgehäuse entlang fließt und dadurch entsprechend lange Wärme mit der Strömung innerhalb des Reaktorgehäuses austauschen kann. Dies ermöglicht einen besonders großen Wärmestrom, der zwischen der Strömung innerhalb des Reaktorgehäuses und dem Wärmetauschermedium ausgetauscht werden kann. Eine derartige Ausgestaltung des Wärmetauschers mit einem spiralförmigen Wärmetauscherkanal bietet sich insbesondere für einphasige Wärmetauschermedien an, die bei der Aufnahme und/oder Abgabe von Wärme einen Phasenwechsel, beispielsweise Verdampfung und/oder Kondensation nicht durchführen. Bei Wärmetauschermedien, die bei der Aufnahme und/oder Abgabe von Wärme einen Phasenwechsel, beispielsweise Verdampfung und/oder Kondensation durchführen, wird insbesondere die Trennwand weggelassen, so dass sich innerhalb des Wärmetauschers durch den Phasenwechsel eine möglichst hohe Turbulenz ausbilden kann. Gleichzeitig wird die innere Begrenzung des Wärmetauschers durch das Reaktorgehäuse selbst ausgebildet. Ein zusätzlicher Wärmewiderstand zwischen der Strömung innerhalb des Reaktorgehäuses und dem Wärmetauscher wird dadurch vermieden. Das Wärmetauschermedium kann beispielsweise im Gegenstrom zur Strömung innerhalb des Reaktorgehäuses durch den spiralförmigen Wärmetauscherkanal geleitet werden oder aber in Strömungsrichtung, z.B. wenn eine hohe Kühlleistung zu Beginn der Polymerisation, d.h. stromaufwärts, erforderlich ist.

Besonders bevorzugt beträgt ein Verhältnis einer Innenfläche A des rohrförmigen Reaktorgehäuses zu einem Volumen V des rohrförmigen Reaktorgehäuses 0,1 m²/m³ ≤ A/V ≤ 100 m²/m³ bevorzugt 1 m²/m³ ≤ A/V ≤ 50 m²/m³, besonders bevorzugt 5 m²/m³ ≤ A/V ≤ 30 m²/m³, ganz besonders bevorzugt 10 m²/m³ ≤ A/V ≤ 30 m²/m³. Aufgrund des Schabers, der die Ausbildung von Grenzschichten an der Innenseite des Reaktorgehäuses verhindert, ist es möglich, einen vergleichsweise schlanken Rohrreaktor vorzusehen, dessen Reaktorgehäuse bezogen auf das umschlossene Volumen eine vergleichsweise große Innenfläche aufweist, insbesondere, wenn die Welle ebenfalls kühlbar ausgeführt ist und von Statoren ihrerseits geschabt oder gewischt wird. Aufgrund der vergleichsweise großen Innenfläche A des rohrförmigen Reaktorgehäuses kann eine entsprechend hohe Wärmetauscherleistung über die Außenseite des Reaktorgehäuses installiert werden. Gleichzeitig lässt sich eine im Wesentlichen homogene Temperaturverteilung in radialer Richtung leichter erreichen. Gleichzeitig kann der Rohrreaktor größeren Innendrücken standhalten, ohne dass die Wandstärke zu groß gewählt werden muss. Dies ermöglicht es, die Reaktionsparameter auch über einen größeren Druckbereich einzustellen und zu kontrollieren.

In einer bevorzugten Ausführungsform weist der Schaber bzw. Wischer mindestens zwei, bevorzugt 2 bis 8 Teilschaber bzw. -wischer auf, wobei die Teilschaber bzw. -wischer in axialer Richtung gelenkig, beispielsweise über dem Fachmann hinreichend bekannte Lagervorrichtungen, wie beispielsweise über ein sich am Reaktorgehäuse abstützendes Mehrbein wie zum Beispiel ein Dreibein, miteinander verbunden sind. Der Schaber bzw. Wischer kann dadurch in mehrere kleinere Teile unterteilt werden, die aufgrund der gelenkigen Verbindung miteinander dem Formverlauf des rohrförmigen Reaktorgehäuses leichter folgen können. Insbesondere ist es möglich, Verformungen des Reaktorgehäuses, insbesondere Biegungen aufgrund von Wärmedehnungseffekten folgen zu können, auch ohne dass das Schaberblatt in eine Schrägstellung zur Innenseite des Reaktorgehäuses gelangt. Beispielsweise kann mit Hilfe von drei Beinen des Dreibeins, die sich an drei Stellen an der Innenseite des Reaktorgehäuses abstützen können, sichergestellt werden, dass der jeweilige Teilschaber zwischen zwei Dreibeinen mittig angeordnet ist. Das Dreibein kann unbeweglich oder mit dem Schaber bzw. Wischer zumindest teilweise mitdrehend ausgestaltet sein. Wenn sich das Reaktorgehäuse aufgrund von Wärmedehnungseffekten verbiegen sollte, wird automatisch der jeweilige Teilschaber bzw. - wischer an den neuen Formverlauf angepasst. Selbst bei einem durch Wärmedehnungseffekte leicht gekrümmten Verlauf des Reaktorgehäuses wird durch den Schaber eine kolbenförmige Pfropfenströmung nicht signifikant gestört.

Der oder die Schaber bzw. Wischer sind über den Antrieb antreibbar, wobei die Kraftübertragung durch mechanische oder magnetische Kupplung bewerkstelligt werden kann.

Bei der Verwendung von Wellen zur mechanischen Kraftübertragung sind diese vorzugsweise über eine zwischen der Welle und dem Reaktorgehäuse angeordnete doppelt wirkende Gleitringdichtung abgedichtet, wobei die Gleitringdichtung insbesondere ein für unter den Polymerisationsbedingungen inertes Sperrmedium enthält. Die Gleitringdichtung kann zwischen ihren beiden Gleitflächen einen Ringkammerraum einschließen, der mit der Sperrflüssigkeit gefüllt sein kann. Die insbesondere unter Druck stehende Sperrflüssigkeit kann dabei beide Gleitringpaarungen schmieren. Dadurch wird vermieden, dass sich Edukte und/oder Produkte an den Gleitflächen anlagern und Undichtigkeiten verursachen können. Bei der Herstellung von synthetischen Kautschuken kann das Eindringen von Wasser, wie beispielsweise von Luftfeuchtigkeit aus der Umgebungsluft, in das Innere des Reaktorgehäuses vermieden werden. Eine Verlangsamung der Polymerreaktion innerhalb des Reaktorgehäuses durch Wassereintritt und gegebenenfalls damit verbundener Katalysatordeaktivierung wird dadurch vermieden. Als Sperrmedium kann beispielsweise ein Lösungsmittel verwendet werden, das auch bei der Polymerisationsreaktion eingesetzt wird.

Vorzugsweise weist das Schaber- bzw. Wischerblatt eine Oberfläche mit einem im Vergleich zu Stahl geringeren Reibungskoeffizienten auf, wobei das Schaber- bzw. Wischerblatt beispielsweise aus fluorhaltigen Polymeren und/oder ähnlichen Materialen wie zum Beispiel Polyetheretherketon (PEEK) besteht, sie enthält oder damit beschichtet ist, vorzugsweise aus fluorhaltigen Polymeren besteht oder damit beschichtet ist. Bevorzugte fluorhaltige Polymere sind Polytetrafluorethylen (PTFE), Polyvinylidenfluorid (PVDF) und Ethylen-Tetrafluorethylen-Copolymer (ETFE).

In einer weiteren Ausführungsform sind die weiteren im Reaktorraum liegenden Oberflächen, einer weiteren Ausführungsform zumindest die nicht geschabten oder gewischten Oberflächen, so gefertigt oder behandelt, dass die Anhaftung von Feststoffen, wie insbesondere synthetischen Kautschuken im Vergleich zu Stahl, insbesondere zu Edelstahl 1.4571 vermindert ist. In einer Ausführungsform sind die Oberflächen mit antiadhäsiven Beschichtungen z.B. aus polymeren, gegebenenfalls fluorhaltigen Organosilanen versehen.

Gleiches gilt für den Fall, dass die Statoren für das Schaben oder Wischen der Mittelwelle ausgelegt sind.

Durch die geringere Reibung zwischen dem Schaber- bzw. Wischerblatt und der Innenseite des Reaktorgehäuses können Reibungsverluste beim Betrieb des Schabers bzw. Wischers reduziert werden. Gleichzeitig kann insbesondere bei höheren Drehzahlen des Schabers oder Wischers das Ausmaß von Reibungswärme an der Innenseite des Reaktorgehäuses reduziert werden. Insbesondere kann die Oberfläche des Schaber- bzw. Wischerblatts beispielsweise durch mechanische oder chemische Modifikation derart beschaffen sein, dass abgeschabtes Gel nicht bevorzugt an dem Schaberblatt anliegt, sondern sich schnell von dem Schaberblatt ablöst. Auch das Design der Schaber/Wischer ist bevorzugt so ausgeführt, dass möglichst wenig Ecken, Spalten oder Toträume entstehen, in denen es zu Anbackungen kommen kann. Das abgeschabte oder abgewischte Gel kann dadurch leicht wieder der Strömung zugeführt und in der Strömung suspendiert werden.

Vorzugsweise ist das Schaber- bzw. Wischerblatt zu einer durch die geometrische Mittelachse verlaufende radial ausgerichtete Linie geneigt und/oder gebogen, wobei das Schaber- bzw. Wischerblatt einen radial nach innen ausgerichteten Befestigungskopf aufweist und auf das Schaber- bzw. Wischerblatt, insbesondere auf den Befestigungskopf, eine nach radial außen gerichtete Kraft aufprägbar ist. Die Neigung der Schaber- bzw. Wischerblätter zur Radialen kann beispielsweise im Bereich von mehr als 0 bis 90°, vorzugsweise 20 bis 60° und besonders bevorzugt 30 bis 50° in jede Richtung betragen. Die Aufprägung kann beispielsweise durch Federkraft, hydraulische Kräfte, elastische Kräfte oder durch Fliehkräfte oder mehrere der vorgenannten Kräfte erfolgen. Durch die geneigte bzw. gebogene Ausrichtung des Schaber- bzw. Wischerblatts im Bereich des Kontakts zur Innenseite des Reaktorgehäuses wird vermieden, dass das polymerisierte Produkt einen Spalt zwischen dem Schaberblatt und dem Reaktorgehäuse verstopft oder verklebt. Unnötig hohe Drehmomente für den Schaber oder Wischer werden dadurch vermieden. Durch die radial nach außen weisende Kraft kann eine genügend hohe Anpresskraft des Schaber- bzw. Wischerblatts an das Reaktorgehäuse aufgeprägt werden, um Ablagerungen, insbesondere Gel, von der Innenseite des Reaktorgehäuses abzuschaben oder abzuwischen. Gleichzeitig kann das Schaber- bzw. Wischerblatt nach radial innen ausweichen, um bei Unebenheiten des Reaktorgehäuses und/oder zu festen Ablagerungen die Drehung des Schabers oder Wischers nicht zu blockieren. Durch die gebogene bzw. geneigte Ausrichtung des Schaber- bzw. Wischerblatts, kann insbesondere eine Ausweichbewegung des Schaber- bzw. Wischerblatts vorgesehen sein, die nur teilweise in radialer Richtung erfolgt und einen Bewegungsanteil seitlich zur radialen Richtung aufweist. Zusätzlich oder alternativ kann das Schaber- bzw. Wischerblatt angefast sein. Dadurch wird ein Anschlagen des Schaber- bzw. Wischerblatts an einer festen Verkrustung, die zu einem Blockieren des Schabers oder Wischers führen kann, vermieden, da das Schaber- bzw. Wischerblatt aufgrund der ausgebildeten Schräge über die Verkrustung entgegen der nach radial nach außen aufgebrachten Kraft gehoben werden kann.

Insbesondere sind in axialer Richtung mindestens zwei Schaber- bzw. Wischerblätter angeordnet, wobei dann die Schaber- bzw. Wischerblätter um einen Winkel α in Umfangsrichtung versetzt sind und der Winkel α insbesondere 30° ≤ α ≤ 150°, vorzugsweise 45° ≤ α ≤ 135°, weiter bevorzugt 60° ≤ α ≤ 120° und besonders bevorzugt α = 90°±2° beträgt. Durch die versetzte Anordnung der Schaber- bzw. Wischerblätter ergeben sich für den Schaber bzw. Wischer mehrere Abstützpunkte an der Innenseite des Reaktorgehäuses, die ein Durchhängen einer Antriebswelle des Schabers oder Wischers und/oder ein Schwingen der Antriebswelle des Schabers oder Wischers vermeiden.

Vorzugsweise sind in Umfangsrichtung mindestens zwei, vorzugsweise mindestens drei oder mindestens vier, Schaber- bzw. Wischerblätter in gleichmäßigem Abstand zueinander hintereinander angeordnet. Bei zwei Schaber- bzw. Wischerblättern ergibt sich in Umfangsrichtung ein Winkel β = 180° ± 5°, bei drei Schaber- bzw. Wischerblättern ein Winkel β = 120° ± 5°, bei vier Schaber- bzw. Wischerblättern ein Winkel β = 90° ± 5° und so weiter. Dies führt zu einer zusätzlichen Zentrierung der Antriebswelle des Schabers oder Wischers.

In einer weiteren Ausführungsform sind die Schaber oder Wischer in axialer und tangentialer Richtung derart verteilt, dass die Welle ebenso axial zentriert wird. Die gelingt auch, wenn in Umfangsrichtung nur 1 Schaber oder Wischer angeordnet ist. Der in axialer Richtung nächste Schaber kann in tangentialer Richtung mit einem Winkel β von vorzugsweise mehr als 90° angeordnet sein, der in axialer Richtung dann folgende ebenso zu den beiden vorherigen und so weiter. So lässt sich erreichen, dass ein Wellenabschnitt zwischen zwei Kupplungen zentriert werden kann.

In einer weiteren Ausführungsform ist der Rohrreaktor stromaufwärts mit zumindest einer Mischkammer verbunden, die ein die Mischkammer umschließendes Gehäuse und zumindest ein innerhalb der Mischkammer angeordnetes Mischelement aufweist.

Geeignete Mischelemente sind dem Fachmann hinlänglich bekannt und umfassen statische oder bewegliche, vorzugsweise bewegliche Mischelemente. Besonders bevorzugt weist die Mischkammer einen Impeller auf. Der besondere Vorteil einer vorgeschalteten Mischkammer liegt darin, dass die Edukte vor dem Eintritt in den erfindungsgemäßen Rohrreaktor mit einer hohen Mischungsenergie durchmischt werden können womit die bei typischerweise tiefen Temperaturen vorliegenden, viskosen Reaktionsmischungen beobachtete Schlierenbildung weitestgehend vermieden werden kann. Schlierenbildung führt häufig in unerwünschter Weise zu lokalen Hotspots, inhomogenem Reaktionsverlauf oder vermehrten Nebenreaktionen. Die Dimensionierung der Mischkammer und der Mischelemente ist vorzugsweise derart aufeinander abgestimmt, dass eine durchschnittliche Verweilzeit in der Mischkammer zwischen 1 und 120 s, vorzugsweise zwischen 2 und 60 s, besonders bevorzugt zwischen 2 und 20 s und ein möglichst hoher Grad an Homogenisierung unter den Reaktionsbedingungen erreicht werden kann. Typische Mischleistungen, die dafür erforderlich sind können beispielsweise im Bereich von 0,001 bis 100 kW/l oder 0,001 bis 1 kW/l liegen, wobei die Mischleistung auf die Leistungsaufnahme des Mischelements pro Liter Volumen der Mischkammer bezogen ist.

In einer bevorzugten Ausführungsform sind in axialer Richtung des die Mischkammer umschließenden Gehäuses mindestens ein weiterer Wärmetauscher zur Einstellung einer Temperatur einer innerhalb der Mischkammer vorgesehenen Strömung angeordnet, wobei die vorgenannten besonderen Ausführungsformen für Wärmetauscher gleichermaßen gelten.

Vorzugsweise ist das die Mischkammer umschließende Gehäuse mit dem Reaktorgehäuse durch eine Zwischenplatte mit Durchtrittsöffnungen für das Reaktionsgemisch verbunden.

Die Erfindung betrifft ferner die Verwendung des vorstehend beschriebenen Rohrreaktors, der wie vorstehend beschrieben aus- und weitergebildet sein kann, zur Herstellung von synthetischen Kautschuken durch Polymerisation von polymerisierbaren Monomeren innerhalb des Reaktorgehäuses.

Unter synthetischen Kautschuken sind im Rahmen der Erfindung nicht natürlich vorkommende Elastomere zu verstehen. Bevorzugte synthetische Kautschuke sind Butyl-Kautschuk, Polybutadien (BR) und Poly-Styrol-Butadien (SBR), Ethylen-Propylen-DienKautschuk (EPDM), Poly-Acrylnitril-Butadien-Kautschuk (NBR), hydrierter Poly-Acrylnitril-Butadien-Kautschuk (H-NBR), Fluorkautschuke (FKM), Polychloropren (CR) und Polyethylen-Vinyl-Acetat (EVA bzw. EVM) zu verstehen, wobei vorgenannte synthetischen Kautschuke beispielsweise eine Molmasse von 5,000 bis 5,000,000 g/mol aufweisen können.

Besonders bevorzugte synthetische Kautschuke sind Butyl-Kautschuk und Polybutadien (BR), ganz besonders bevorzugt Butyl-Kautschuk mit einer Molmasse von 300,000 bis 1,000,000 g/mol und Polybutadien (BR) mit einer Molmasse von 5,000 bis 1,000,000 g/mol, wobei Butyl-Kautschuk mit einer Molmasse von 300,000 bis 1,000,000 g/mol noch weiter bevorzugt ist.

Butyl-Kautschuk ist ein Copolymer von Isobuten (2-Methylpropen) und zumindest einem konjugierten Multiolefin wie insbesondere Isopren (2-Methylbuta-1,3-dien). Der Anteil von Wiederholungseinheiten im Butylkautschuk, die sich vom konjugierten Multiolefin wie insbesondere Isopren ableiten, beträgt beispielsweise mehr als 0 bis 10 mol-%, vorzugsweise von 1,5 bis 5 mol %. Ein besonders bevorzugter Butyl-Kautschuk ist ein Copolymer von Isobuten und Isopren mit den vorgenannten Verhältnissen der Monomereinheiten.

Die Polymerisation erfolgt typischerweise als Copolymerisation von Isobuten und zumindest einem konjugierten Multiolefin wie insbesondere Isopren bei Temperaturen von -100°C bis - 30°C, vorzugsweise -100°C und -40°C und besonders bevorzugt -100°C bis -60°C in Gegenwart eines Katalysators. Als Lösungsmittel können beispielsweise für den sogenannten "Slurry-Prozess" Chlormethan für den sogenannten "Solution-Prozess" Kohlenwasserstoffe wie insbesondere offenkettige oder cyclische, verzweigte oder unverzweigte Pentane, Hexane oder Heptane oder Mischungen davon eingesetzt werden, wobei vorgenannte Pentane und Hexane oder Mischungen davon bevorzugt sind.

Als Katalysatoren können je nach Prozessführung in an sich bekannter Weise Aluminiumchlorid oder Aluminiumalkylhalogenide wie beispielsweise Diethylaluminiumchlorid, Ethylaluminiumdichlorid, Dimethylaluminiumchlorid Methylaluminiumdichlorid oder Mischungen davon eingesetzt werden. Der Katalysator oder die Katalysatoren werden beispielsweise mit geringen Mengen protischer Lösungsmittel wie beispielsweise Wasser, Salzsäure, Chlorwasserstoff oder aliphatischen Alkoholen wie Methanol aktiviert und den zu polymerisierenden Monomeren im Lösungsmittel suspendiert oder gelöst zugegeben, wobei als Lösungsmittel vorzugsweise das Lösungsmittel verwendet wird in dem die Polymerisation stattfindet.

Aufgrund der konstruktiven Ausgestaltung der Rohrreaktors lassen sich die Reaktionsbedingungen innerhalb des Rohrreaktors entlang der Länge des Rohrreaktors gut vorhersehen und entsprechend leicht beeinflussen und kontrollieren. Insbesondere zu Beginn der Polymerisationsreaktion, wenn vergleichsweise viel Edukt und nur wenig Produkt vorliegt, ist die Viskosität der Strömung mit typischerweise ≤ ImPas besonders gering. Viskositäten werden, wenn nicht anderweitig angegeben, mittels Kapillarviskosimetrie bei einer Temperatur von 23°C nach ISO 1628 bestimmt oder darauf bezogen. Gleichzeitig entsteht aufgrund der hohen Anzahl an Reaktionspartner besonders viel Reaktionswärme, die über das Reaktorgehäuse abgeführt werden kann. Da eine Rückströmung von polymerisiertem Produkt vermieden werden kann, ist es möglich, die Viskosität in einem Bereich besonders niedrig zu halten, in dem eine besonders hohe Wärmeabfuhr erforderlich ist. Aufgrund der niedrigen Viskosität in diesem Bereich lässt sich ein Wärmetransport in radialer Richtung besonders einfach realisieren, wobei in Zusammenwirkung mit dem Schaber ein Wärmeübergangskoeffizienten k von einigen Hundert W/m²K erreicht werden kann. Dadurch ist es insbesondere möglich, im Bereich des Reaktorgehäuses, in dem die größte Wärmeentwicklung stattfindet, bei der Kühlung der Strömung mit einem treibendem Temperaturgefälle von bis zu 30 K oder, in einer anderen Ausführungsform, bis zu 20 K auszukommen. Zum Auslass des Rohrreaktors hin nimmt die Viskosität der Strömung deutlich zu und kann einige Hundert mPas erreichen, so dass sich ein schlechter Wärmeübergangskoeffizient ergibt als im Bereich des Einlasses des Rohrreaktors. Der schlechtere Wärmeübergangskoeffizient entsteht allerdings in einem Bereich, in dem sofern überhaupt nur noch in einem geringeren Ausmaß eine Polymerreaktion stattfindet, so dass eine deutlich geringere Wärmemenge bei der Polymerisation entsteht, die abgeführt werden müsste. Aufgrund der geringeren abzuführenden Wärmemengen wirkt sich die höhere Viskosität der schlechteren Wärmeübergangskoeffizient nicht signifikant nachteilig auf die Kühlung der Strömung aus.

In der Ausführungsvariante mit Schlaufenströmung ist die mittlere Viskosität des Reaktorinhalts im Bereich von einigen Zehn bis einigen Hundert mPas. Die Entfernung von Belägen bzw. die Erneuerung der Grenzschicht an den Wärmeübertragungsflächen an der Reaktorinnenwand bzw. am Rotor über Schaber, Wischer und/oder Statoren erhöht den Wärmeübergangskoeffizient, trotz höherer Viskosität, auf der Produktseite signifikant, so dass auch in dieser Variante höhere Wärmemengen abgeführt werden können.

Die Erfindung betrifft ferner ein Verfahren zur kontinuierlichen Herstellung von Polymeren, bevorzugt synthetischen Kautschuken unter Verwendung, eines Reaktors, der wie vorstehend beschrieben aus- und weitergebildet sein kann. Die Erfindung betrifft ferner die Verwendung des Reaktors zur Herstellung von Polymeren, bevorzugt synthetischen Kautschuken.

In einer Ausführungsform des Verfahrens wird zur kontinuierlichen Herstellung von Polymeren, bevorzugt synthetischen Kautschuken im Reaktor, insbesondere einem Rohrreaktor, eine im Wesentlichen eine entlang der geometrischen Mittelachse des Reaktorgehäuses, wahlweise in vertikaler oder horizontaler Richtung verlaufende Kolbenströmung der Edukte und der Produkte aufgeprägt. Ein bei der Polymerisation sich an einer Innenseite eines Reaktorgehäuses des Rohrreaktors gegebenenfalls ablagernde Feststoffe oder Gele werden durch die Rotationsbewegung des Schabers und der Schaberblätter abgeschabt. Durch das Abschaben des Gels von der Innenseite des Reaktorgehäuses und der Welle wird eine Verschlechterung des Wärmeübergangskoeffizienten der Strömung innerhalb des Reaktorgehäuses und dem Reaktorgehäuse über der Zeit vermieden. Gleichzeitig können die zum Abschaben oder Abwischen der kühlbaren Welle gegebenenfalls eingesetzten Statoren als Stromstörer wirken und erhöhen damit die redispergierende Wirkung der rotierenden Schaber oder Wischer. Dies führt zu konstanten Randbedingungen, die für einen kontinuierlichen Betrieb des Rohrreaktors vorteilhaft sind. Gleichzeitig wird durch das Schaben oder Wischen ein guter Wärmeübergang zwischen der Strömung und dem Reaktorgehäuse gewährleistet. Durch die Kolbenströmung und gegebenenfalls die Wirkung der Statoren ist es möglich, Schwerkrafteffekte in der Strömung, wie beispielsweise bei einer Schlaufenströmung, weitestgehend zu eliminieren, da der durch den Schaber aufgeprägte Strömungsanteil in radialer Richtung Schwerkrafteffekte deutlich überwiegt. Dies ermöglicht über die Länge des Rohrreaktors in Strömungsrichtung einen vorherseh- und einstellbaren Reaktionsverlauf, der an vorher zu bestimmenden Stellen gezielt kontrolliert und beeinflusst werden kann. Dies ermöglicht es insbesondere, ein gewünschtes Molekulargewicht mit einer vergleichsweise schmalen Streuung zu erreichen. Für das Molekulargewicht wird, sofern nicht anderweitig angegeben, die gewichtsmittlere Molmasse M_{w}, bestimmt durch Gelpermeationschromatographie (GPC), verwendet. Insbesondere lässt sich über eine bereichsbezogene individuell eingestellte Kühlung des Rohrreaktors die Molekulargewichtsverteilung bezüglich ihrer Lage, Breite und Form einstellen und modifizieren.

Besonders bevorzugt werden in Strömungsrichtung unterschiedliche Wärmetauschertemperaturen zur Einstellung eines vordefinierten Molekulargewichts unter Berücksichtigung der bei der Polymerisation auftretenden Wärmebilanzen, Verweilzeiten und Konzentrationen aufgeprägt. Insbesondere ist es möglich, unter Berücksichtigung der Kinetik der Polymerisationsreaktion die entlang des Rohrreaktors auftretenden Wärmemengen zu berechnen, um insbesondere eine konstante Temperatur der Strömung einzustellen. Durch die in Strömungsrichtung unterschiedlichen Wärmetauschertemperaturen kann für jeden Bereich in axialer Richtung des Rohrreaktors die auftretende Reaktionswärme bei einer exothermen Reaktion abgeführt bzw. bei einer endothermen Reaktion zugeführt werden. Bei einer endothermen Reaktion ergibt sich bei der Wärmebilanz eine negative Reaktionswärme, während sich bei einer exothermen Reaktion bei der Wärmebilanz eine positive Reaktionswärme ergibt.

Besonders bevorzugt erfolgt das Abschaben des Gels mit einer Geschwindigkeit v an der Innenseite eines Reaktorgehäuses von 0,05 m/s ≤ v ≤ 10m/s vorzugsweise 0,5 m/s ≤ v ≤ 6 m/s, besonders bevorzugt 1 m/s ≤ v ≤ 4 m/s und ganz besonders bevorzugt 2 m/s ≤ v ≤ 3 m/s . Bei derartigen Geschwindigkeiten v, mit denen ein Schaber- bzw. wischerblatt an der Innenseite des Reaktorgehäuses entlanglaufen kann, wird vermieden, dass sich ein signifikant dicker Belag durch Feststoff- oder Gelbildung an der Innenseite des Reaktorgehäuses ergibt. Gleichzeitig kann bei derartigen Geschwindigkeiten des Schaber- bzw. Wischerblatts in Umfangsrichtung ein hinreichend großer Massentransport in radialer Richtung aufgeprägt werden, der zu einer guten homogenen Mischung der Strömung in radialer Richtung führt und den Wärmeübergang zwischen der Strömung und dem Reaktorgehäuse verbessert.

Bei Verwendung einer vorgeschalteten Mischkammer beträgt die durchschnittliche Verweilzeit in der Mischkammer beispielsweise zwischen 1 und 120 s, vorzugsweise zwischen 2 und 60 s, besonders bevorzugt zwischen 2 und 20 s.

Bei Verwendung einer vorgeschalteten Mischkammer beträgt die durchschnittlich aufgenommene Mischenergie beispielsweise zwischen 0,001 und 120 J/1.

Die typischerweise eingebrachte Mischleistung kann bezogen auf die Energieaufnahme des Mischers beispielsweise zwischen 0,001 und 100 kW/l liegen.

Nachfolgend wird die Erfindung unter Bezugnahme auf die anliegenden Zeichnungen anhand bevorzugter Ausführungsbeispiele näher erläutert.

Es zeigen:
- Fig. 1:: eine schematische Seitenansicht eines Rohrreaktors,
- Fig. 2:: eine schematische Detailansicht eines weiteren Rohrreaktors,
- Fig. 3:: eine schematische Schnittansicht des Rohrreaktors aus Fig. 1,
- Fig. 4:: eine schematische Detailansicht des Rohrreaktors aus Fig. 2,
- Fig. 5:: eines Schabers für den in Fig. 2 dargestellten Rohrreaktor und
- Fig. 6:: eine schematische Schnittansicht eines Schaberblatts für den Schaber aus Fig. 5.
- Fig. 7:: eine schematische Detailansicht eines weiteren Rohrreaktors mit Umpumpkreislauf
- Fig. 8:: eine schematische Seitenansicht eines weiteren Rohrreaktors mit vorgeschalteter Mischkammer
- Fig. 9:: eine schematische Seitenansicht eines weiteren Rohrreaktors mit vorgeschalteter Mischkammer und zweitem Reaktorraum
- Fig. 10:: eine schematische Querschnittsansicht eines Rohrreaktors (als Schaber)

- Fig. 11:: eine schematische Querschnittsansicht eines Rohrreaktors (als Wischer)
- Fig. 12:: eine schematische Seiten- und Querschnittsansicht eines Reaktorraums mit 3 Statoren und 3 Schabern oder Wischern
- Fig. 13:: eine schematische Seiten- und Querschnittsansicht eines Reaktorraums mit 2 Statoren und 2 Schabern oder Wischern

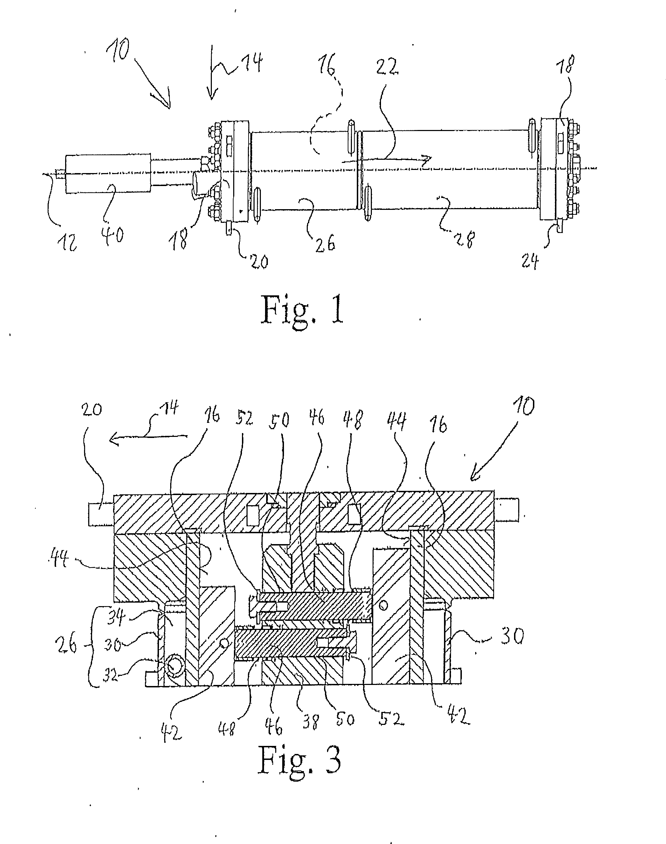

Der in Fig. 1 dargestellte Reaktor 10 weist eine geometrische Mittelachse 12 auf, die senkrecht zu einer Schwerkraftrichtung 14, das heißt horizontal, ausgerichtet ist. Der Reaktor 10 weist ein rohrförmiges Reaktorgehäuse 16 auf, das stirnseitig über angeflanschte Stirnplatten 18 geschlossen ist. Über mindestens einen Einlass 20 können Edukte in das rohrförmige Reaktorgehäuse 16 eingeleitet werden, wobei die Polymerisationsreaktion entlang einer Strömungsrichtung 22 erfolgt. Über einen Auslass 24 kann das entstandene Produkt den Reaktor 10 verlassen. Innerhalb des Reaktorgehäuses 16 bildet sich für die Strömung eine Kolbenströmung aus, die in radialer Richtung im Wesentlichen einen gleich großen Geschwindigkeitsvektor in Strömungsrichtung 22 aufweist. Der Reaktor 10 wird somit kontinuierlich zur Durchführung einer kontinuierlichen Polymerisation betrieben.

Die bei der Polymerisation entstehende Reaktionswärme kann über einen ersten Wärmetauscher 26 und ein in axialer Richtung neben dem ersten Wärmetauscher 26 angeordneten zweiten Wärmetauscher 28 abgeführt werden. Da zu Beginn des Reaktorgehäuses 16, das heißt stromaufwärts, eine intensivere Reaktion stattfindet als zum Ende des Reaktorgehäuses 16, das heißt stromabwärts, stattfindet, entsteht zu Beginn des Reaktorgehäuses 16 pro Längeneinheit in Strömungsrichtung 22 ein höherer Wärmestrom stromauf- als stromabwärts. Der erste Wärmetauscher 26 ist daher für eine entsprechend hohe Wärmeübertragerleistung ausgestaltet. Zusätzlich oder alternativ kann der erste Wärmetauscher 26 eine kürzere Strecke in axialer Richtung kühlen als der zweite Wärmetauscher 28. Aufgrund der innerhalb des Reaktorgehäuses 16 in Strömungsrichtung 22 einstellbare Kolbenströmung kann die Wärmetauscherleistung, die axiale Erstreckung, das verwendete Wärmetauschermedium sowie Druck und Temperatur des Wärmetauschermediums individuell auf die innerhalb der sich in Strömungsrichtung 22 verändernden Reaktionsbedingungen angepasst werden, so dass für jeden Abschnitt in Strömungsrichtung 22 eine geeignete Kühlleistung eingestellt werden kann. Dies ermöglicht es insbesondere, innerhalb des Rohrreaktors 10 eine im Wesentlichen konstante Temperatur einzustellen, die zu einem Polymerisationsprodukt führt, das eine gewünschte Molekulargewichtsverteilung aufweist.

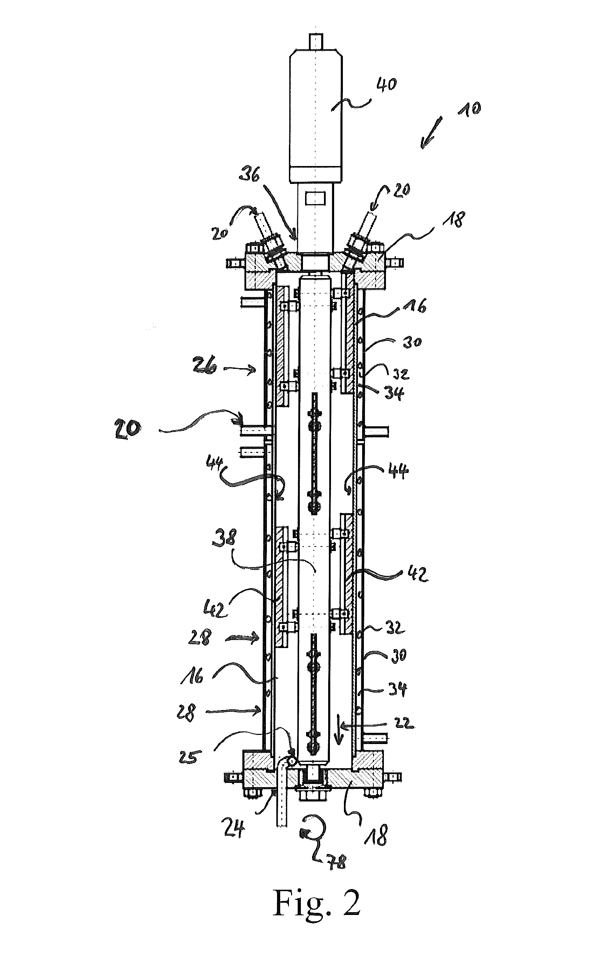

Wie in Fig. 2 dargestellt, weisen die Wärmetauscher 26, 28 jeweils einen Außenmantel 30 auf, der zusammen mit dem Reaktorgehäuse 16 das Volumen des Wärmetauschers 26, 28 begrenzt. Zwischen dem Außenmantel 30 und dem Reaktorgehäuse 16 ist eine spiralförmige Trennwand 32 in Form eines gewundenen Rohres vorgesehen, die einen spiralförmigen Wärmetauscherkanal 34 begrenzt. Bei der Verwendung eines Wärmetauschermediums, des im Betrieb einen Phasenwechsel durchführt, beispielsweise verdampfendes Ethylen, kann die Trennwand 32 entfallen. Der Reaktor 10 weist ferner einen Schaber bzw. Wischer 36 auf, der einen Antrieb 38 aufweist, die von einem Motor 40 angetrieben wird. Mit dem Antrieb 38, hier als Mittelwelle ausgestaltet, sind mehrere Schaber- bzw. Wischerblätter 42 verbunden, von denen im dargestellten Ausführungsbeispiel jeweils zwei paarweise gegenüberliegend angeordnet sind. Es können aber auch mehrere Schaber- bzw. Wischerblätter 42, insbesondere drei Schaber- bzw. Wischerblätter 42 regelmäßig in Umfangsrichtung hintereinander angeordnet sein. Im dargestellten Ausführungsbeispiel sind in axialer Richtung benachbarte Paare von Schaber- bzw. Wischerblättern 42 um 90° in Umfangsrichtung versetzt angeordnet. Die Schaber- bzw. Wischerblätter 42 kontaktieren im dargestellten Fall eine Innenseite 44 des Reaktorgehäuses 16, um insbesondere Verkrustungen oder Gelbildungen von der Innenseite 44 abschaben zu können. Der Reaktor 10 enthält weiterhin insgesmt drei Einlässe 20 sowie einen Auslass 24, der so gestaltet ist, dass die Auslassöffnung 25 im Wesentlichen tangential zur Umlaufrichtung 78 des Antriebs 38 ausgerichtet ist. Die beiden ersten Einlässe 20 sind in der in Strömungsrichtung 22 vorderen Stirnplatte 18 angebracht, ein dritter Einlass 20 befindet sich in axialer Richtung etwa 35 % bezogen auf die axiale Weglänge vom ersten Einlass bis zum ersten Auslass 24 innerhalb des Rohrreaktors davon entfernt.

Wie in Fig. 3 dargestellt, weisen die Schaber- bzw. Wischerblätter 42 einen Befestigungskopf 46 auf, der sich über eine Feder 48 vom Antrieb 38 abstützt. Dadurch kann von den Schaber- bzw. Wischerblättern 42 eine axiale Federkraft auf die Innenseite 44 des Reaktorgehäuses 16 aufgebracht werden. Der Befestigungskopf 46 ist hierbei in einer Bohrung 50 eingesteckt und stirnseitig über einen verschraubten Deckel 52 verliersicher gehalten.

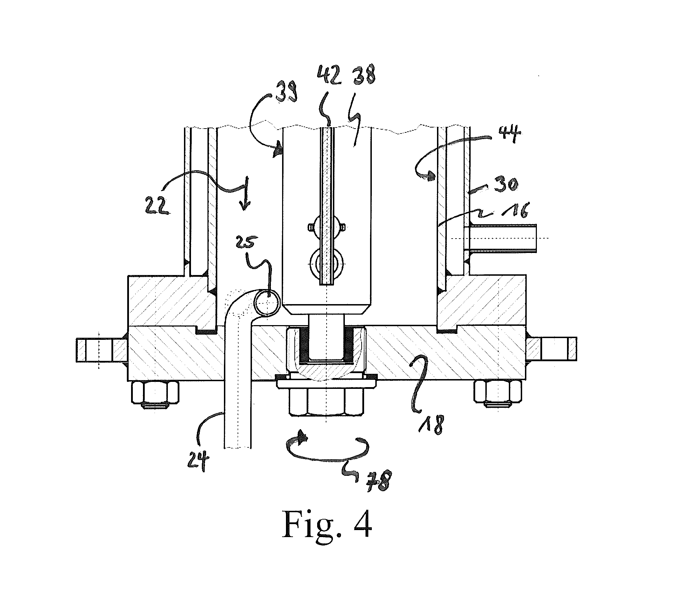

Wie in Fig. 4 dargestellt, weist eine bevorzugte Ausführungsform einen Auslass 24 auf, der so gestaltet ist, dass die Auslassöffnung 25 im Wesentlichen tangential zur Umlaufrichtung 78 des Antriebs 38 ausgerichtet ist. Der Auslass 24 ist nahe der in Strömungsrichtung 22 hinteren Stirnplatte 18 des Reaktors angebracht und der geometrische Schwerpunkt der Auslassöffnung 25 in radialer Richtung näher an der äußeren Begrenzung 39 des Antriebs 38 als an der Innenseite des Reaktorgehäuses 44.

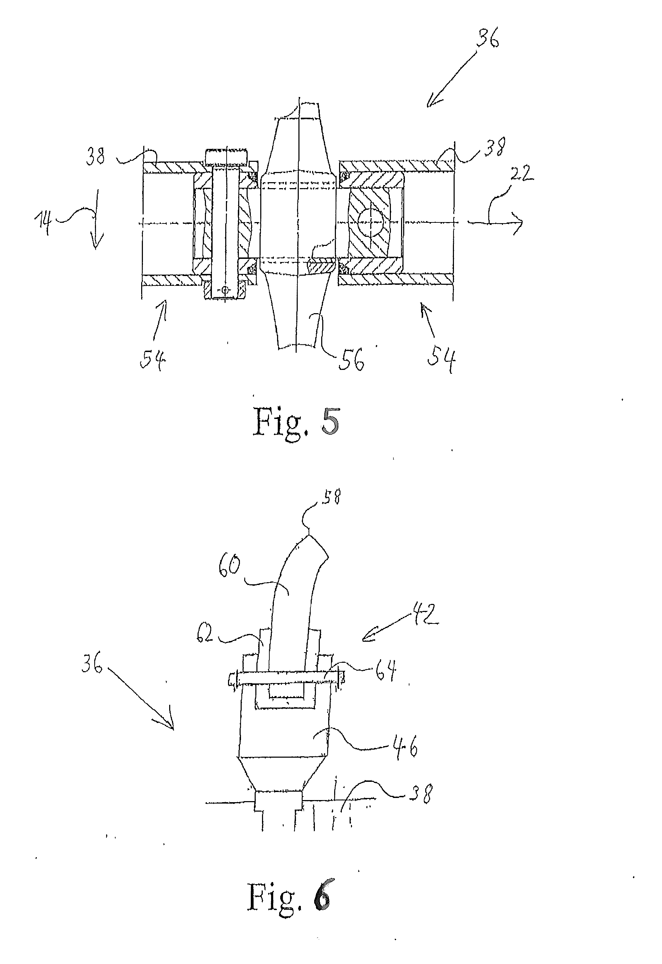

Wie in Fig. 5 dargestellt, kann der Schaber bzw. Wischer 36 mehrere Teilschaber bzw. Teilwischer 54 aufweisen, die insbesondere über ein teilweise dargestelltes Dreibein 56, insbesondere gelenkig miteinander verbunden sein können. Durch die gelenkige Verbindung kann der Schaber bzw. Wischer 36 beispielsweise durch Wärmedehnung verursachte Biegungen des Reaktorgehäuses 16 ausgleichen und einen im Wesentlichen parallelen Kontakt des Schaber- bzw. Wischerblatts 42 mit der Innenseite 44 des Reaktorgehäuse 16 gewährleisten.

Wie in Fig. 6 dargestellt, kann das Schaber- bzw. Wischerblatt 42 an seinem radial nach außen gerichteten Ende geneigt und/oder gebogen sein. Dadurch ergibt sich eine linienförmige Schaber- bzw. Wischerkante 58, die an der Innenseite 44 des Reaktorgehäuses 16 entlanglaufen, d. h. entlang gleiten kann. Das Schaber- bzw. Wischerblatt 42 weist insbesondere ein mit PTFE beschichtetes gebogenes Schaber- bzw. Wischerelement 60 auf, das in einem Halteelement 62 aus Edelstahl eingespannt ist und über einen gesicherten Haltestift 64 mit dem Befestigungskopf 46 verbunden ist.

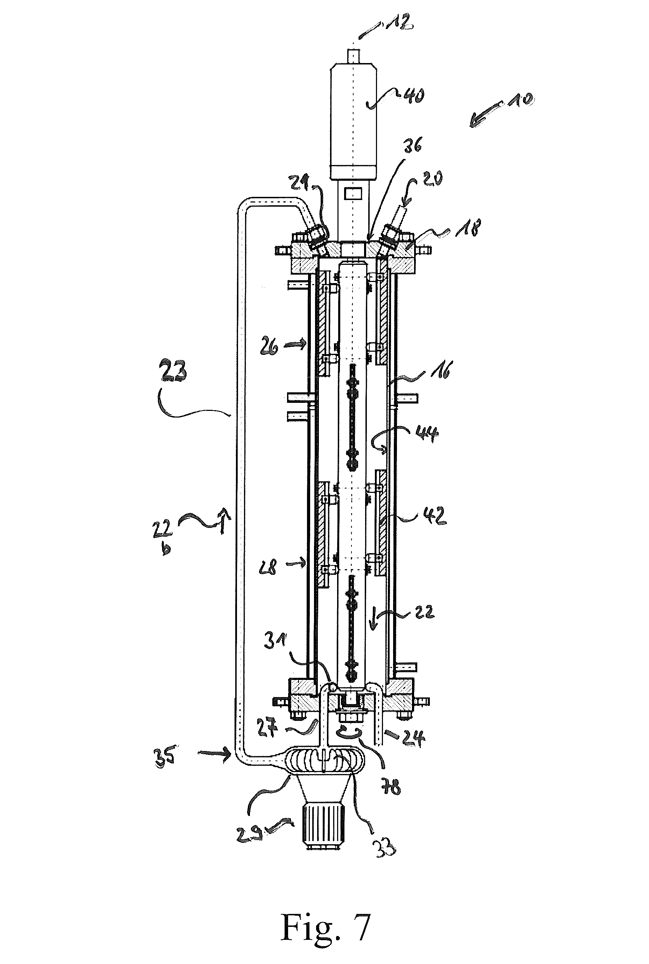

Der in Fig. 7 dargestellte Reaktor 10 weist eine geometrische Mittelachse 12 und einen Umpumpkreislauf 23 auf, mit Hilfe dessen die Axialgeschwindigkeit in Strömungsrichtung 22 erhöht werden kann. Die Kommunikation des Umpumpkreislaufs mit dem Reaktor 10 findet über den Kreislaufeinlass 21 und den Kreislaufauslass 27, wobei der Umpumpkreislauf weiterhin ein Förderorgan 29 aufweist, das hier mit Dispergierelementen 33 versehen ist. Der Kreislaufauslass 27 ist in einer bevorzugten Ausführung derart gestaltet, dass die Kreislaufauslassöffnung 31 im Wesentlichen tangential zur Umlaufrichtung 78 des Antriebs insbesondere einer Mittelwelle angeordnet ist. Im Übrigen gelten die gleichen Bereiche und Vorzugsbereiche hinsichtlich der Ausführungsformen, wie sie für die Auslässe (24) oben bereits beschrieben worden sind. Der Kreislaufauslass 27 befindet sich in Strömungsrichtung 22 hinter dem Kreislaufeinlass 21, vorzugsweise ist der Kreislaufeinlass 21 jeweils betrachtet in Strömungsrichtung 22 in der Nähe oder in der ersten Stirnplatte 18, der Kreislaufauslass in der Nähe oder in der zweiten Stirnplatte 18, wobei Nähe hier jeweils so zu verstehen ist, dass der Kreislaufauslass bzw. -einlass in axialer Richtung (Strömungsrichtung 22) maximal 10 %, vorzugsweise 5 % oder weniger bezogen auf die gesamte axiale Entfernung zwischen den Stirnplatten von den jeweiligen Stirnplatten entfernt sind.

In einer nicht explizit abgebildeten Ausführungsform kann der Auslass 24 auch im Umpumpkreislauf 23 angeordnet sein und der Reaktorinhalt so als Teilstrom im Umpumpkreislauf entnommen werden. Vorzugsweise ist in diesem Fall der Auslass 24 in Strömungsrichtung 22b des Umpumpkreislaufs hinter dem Förderorgan 29 angeordnet, insbesondere dann, wenn es mit Dispergierorganen ausgestattet ist. Ein Beispiel für eine potentielle Auslassposition 35 des Auslasses 24 ist in der Fig. 7 wiedergegeben.

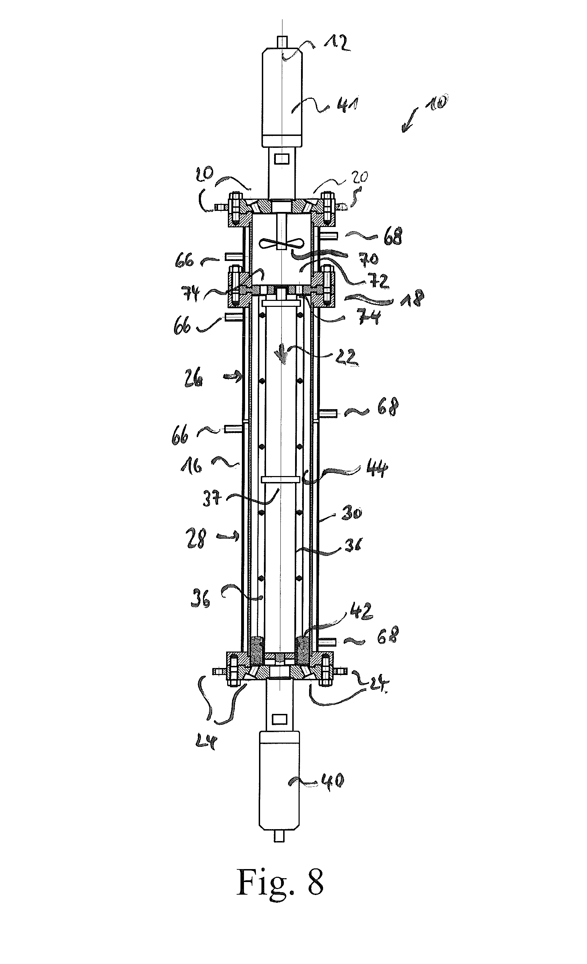

Wie in Fig. 8 dargestellt, weist der Reaktor 10 stromaufwärts d.h. vorgeschaltet eine Mischkammer 72 auf, die ein die Mischkammer umschließendes Gehäuse und ein innerhalb der Mischkammer angeordnetes Mischelement 70 aufweist, der hier als Impeller ausgestaltet ist, der über einen Motor 41 angetrieben wird. Die Mischkammer weist ebenfalls einen Aussenmantel auf, der das Volumen eines Wärmetauschers begrenzt, wobei über den Einlass 66 Wärmetauschermedium in den Wärmetauscher eingeführt werden kann, dass über den Auslass 68 des Wärmetauschermediums wieder entnommen werden kann, so dass die Mischkammer separat gekühlt oder geheizt werden kann. Bei der Herstellung von synthetischen Kautschuken findet typischerweise eine Kühlung auf eine Temperatur im Bereich von -100° bis -30°C statt. Die Mischkammer ist in Strömungsrichtung von der Zwischenplatte 19 des Rohrreaktors begrenzt, wobei der Stofftransport von der Mischkammer 72 in den Innenraum des Rohrreaktors jedoch durch eine oder mehrere, hier dargestellt zwei Durchtrittsöffnungen 74 erfolgen kann.

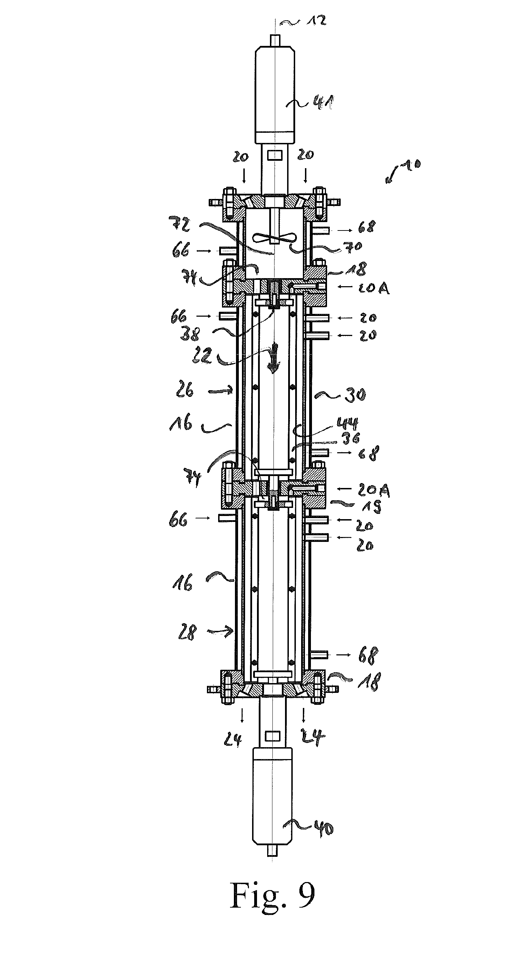

Wie in Fig. 9 dargestellt, kann der Rohrreaktor 10 in zwei oder mehrere, hier dargestellt sind zwei separate Reaktionskammern aufgeteilt sein die jeweils durch eine Zwischenplatte 19 voneinander getrennt sind, wobei jedoch der Stofftransport in Strömungsrichtung durch Durchtrittsöffnungen 74 ermöglicht wird. Sowohl in der Stirnplatte 18, die zwischen der Mischkammer und dem ersten Reaktorraum angeordnet ist, als auch in der Zwischenplatte 19 befinden sich Einlässe 20A für weitere Edukte wie zum Beispiel Lösungsmittel, Katalysatoren oder Monomere. Weitere Einlässe 20 befinden sich in Strömungsrichtung gesehen am Anfang des jeweiligen Reaktorraums. Die Einlässe 20A und 20 haben den Vorteil dass hier über die Reaktionsparameter in gewünschter Weise beeinflusst werden können. So kann der Zusatz von Lösungsmittel zum Beispiel die Viskosität des Reaktionsmediums verringern, der Zusatz von weiteren Mengen oder anderen Monomeren oder der Zusatz von Katalysator die Kettenlänge und/oder Struktur des Polymers verändern.

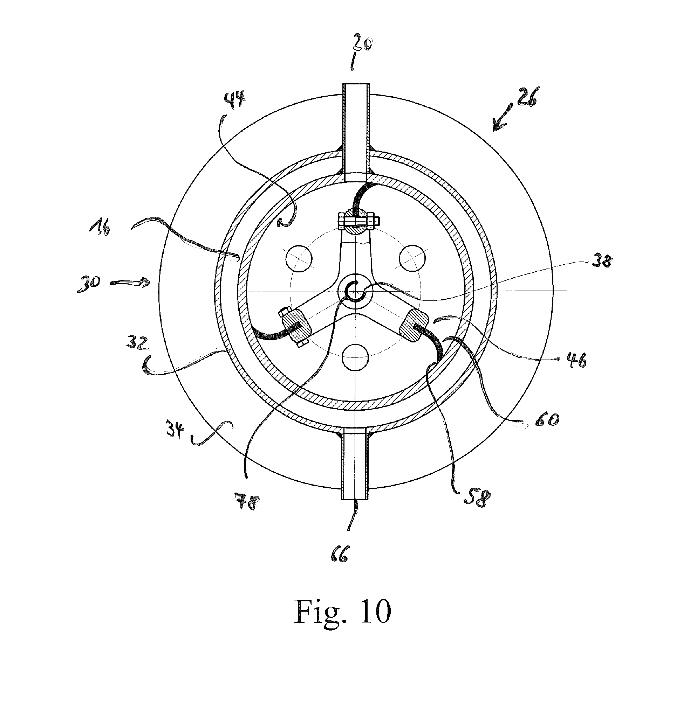

Wie in der Querschnittsansicht in Fig. 10 dargestellt, schaben die Schaberkanten 58 der Schaberelemente 60, die über die Befestigungsköpfe 46 mit dem Antrieb 38 verbunden sind, in Umlaufrichtung 78 die Innenseite 44 des Reaktorgehäuses ab. Die Zuführung von Edukten erfolgt über einen Einlass 20. Der Außenmantel 30 und das Reaktorgehäuse 16 begrenzen das Volumen des Wärmetauschers 26. Die spiralförmige Trennwand 32, hier in Form eines gewundenen Rohres vorgesehen, begrenzt einen spiralförmigen Wärmetauscherkanal 34 in den über den Einlass 66 Wärmetauschermedium zugeführt werden kann.

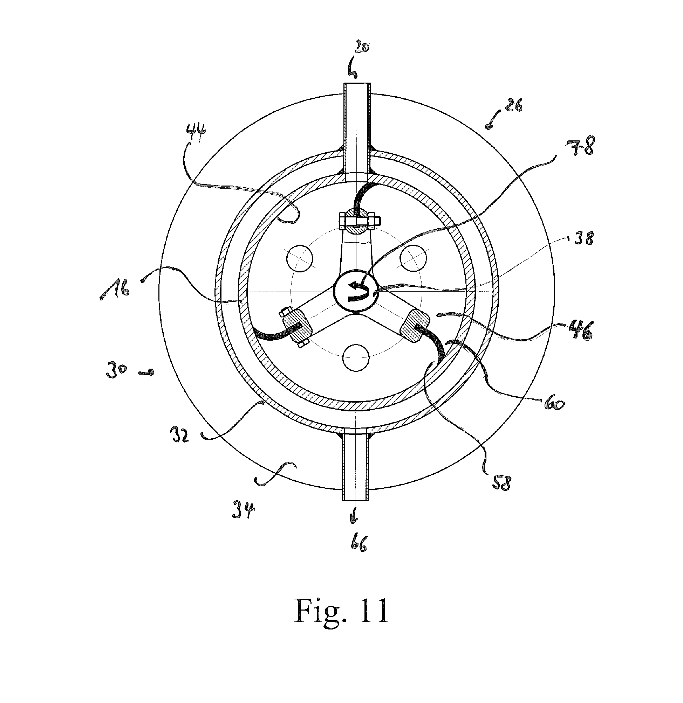

Die Querschnittsansicht in Fig. 11 ist weitgehend identisch zu Fig. 9. wobei jedoch die Vorrichtung mit Wischern 36 ausgestaltet ist. Die Wischerkanten 58 der Wischerelemente 60, die über die Befestigungsköpfe 46 mit dem Antrieb 38 verbunden sind, wischen in Umlaufrichtung die Innenseite 44 des Reaktorgehäuses ab.

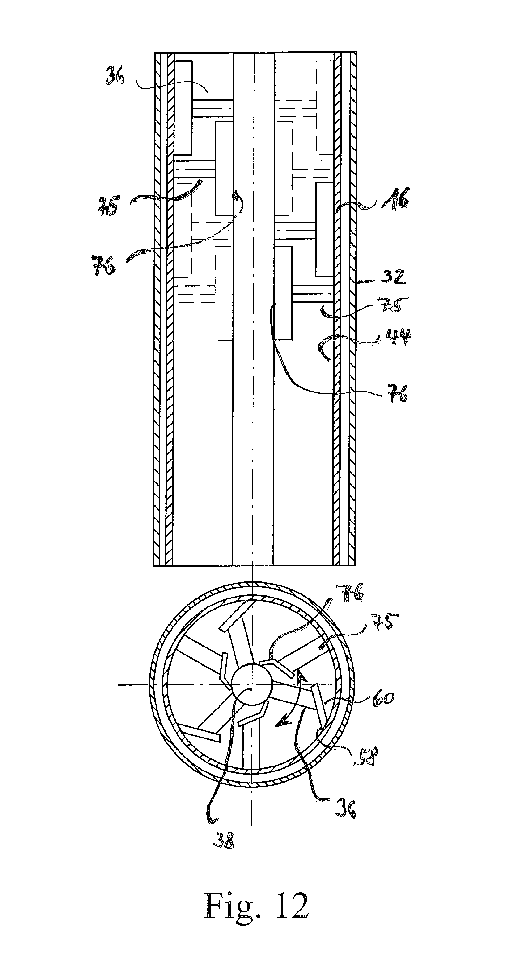

In Fig. 12 ist das rohrförmiges Reaktorgehäuse 16 auf der Innenseite des Reaktorgehäuses 44 mit drei Statoren 75 verbunden, die ihrerseits je nach Umlaufrichtung 78 mit Schaber- bzw. Wischelementen 76 ausgerüstet sind, die den Antrieb 38, der hier als Mittelwelle ausgeführt ist, im Betrieb abschaben oder abwischen. Weiterhin weist der Antrieb 38 je nach Umlaufrichtung drei Schaber bzw. Wischer 36 auf, die im dargestellten Ausführungsbeispiel jeweils um 120° versetzt angeordnet sind.

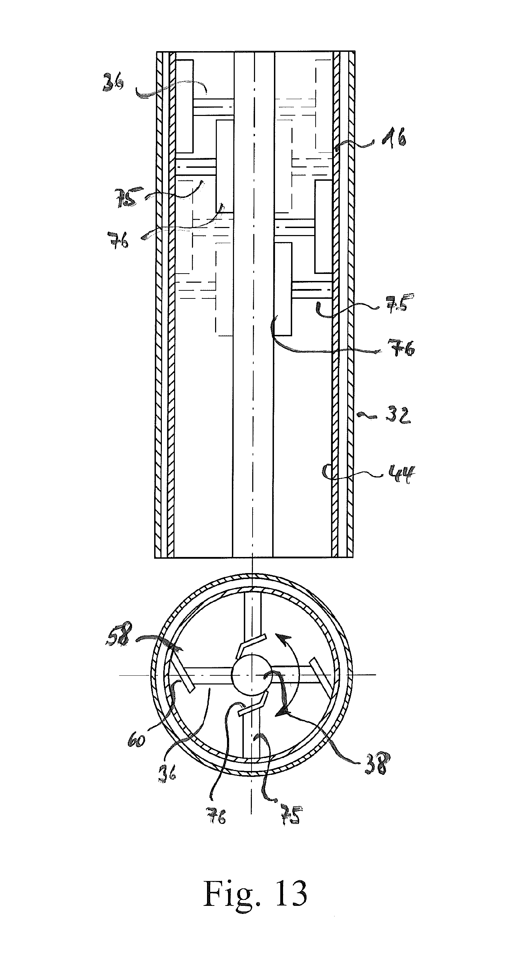

In Fig. 13 ist analog zu Fig. 12 der Reaktorraum jedoch nur mit zwei Statoren 75 und zwei Schabern bzw. Wischern 36 ausgestattet, die jeweils um 180° versetzt angeordnet sind.

Eine Bezugszeichenliste ist nachstehend angegeben:
- 10: Reaktor
- 12: geometrische Mittelachse
- 14: Schwerkraftrichtung
- 16, 44: rohrförmiges Reaktorgehäuse (16), Innenseite des Reaktorgehäuses (44)
- 18: Stirnplatten
- 19: Zwischenplatte
- 20: Einlässe
- 21: Kreislaufeinlass
- 22, 22b: Strömungsrichtung (22), Strömungsrichtung im Umpumpkreislauf 23 (22b)
- 23: Umpumpkreislauf
- 24: Auslässe
- 25: Auslassöffnung
- 26: Erster Wärmetauscher

- 27: Kreislaufauslass
- 28: Zweiter Wärmetauscher
- 29: Förderorgan
- 30: Außenmantel
- 31: Kreislaufauslassöffnung
- 32: spiralförmige Trennwand
- 33: Dispergierelemente
- 34: spiralförmiger Wärmetauscherkanal
- 35: Potentielle Auslassposition für Auslass 24
- 36: Schaber bzw. Wischer
- 37: Verbindungselement
- 38: Antrieb
- 39: Äußere Begrenzung des Antriebs 38
- 40, 41: Motor
- 42: Schaber- bzw. Wischerblätter
- 46: Befestigungskopf
- 48: Feder
- 50: Bohrung
- 52: Deckel
- 54: Teilschaber bzw. Teilwischer
- 56: Dreibein
- 58: Schaber- bzw. Wischerkante
- 60: Schaber- bzw. Wischerelement
- 62: Halteelement
- 64: Haltestift
- 66: Einlass Wärmetauschermedium
- 68: Auslass Wärmetauschermedium
- 70: Mischelement (hier: Impeller)
- 72: Mischkammer
- 74: Durchtrittsöffnungen
- 75: Stator
- 76: Schaber- bzw. Wischelement eines Stators
- 78: Umlaufrichtung

### Ausführungsbeispiel:

Polymerisation mit Gel-Dispergierung in nachgeschaltetem Dispergator

Eine Mischung von 98 Gew.-% Isobuten und 2 Gew.-% Isopren wurde in einem Alkangemisch als Lösungsmittel, das zu 98 Gew.-% aus Alkanen mit einem Siedepunktbereich von 35°C bis 78°C bei Normalbedingungen bestand und mit einer 1:1 Mischung (mol) aus Ethylaluminiumchlorid und Diethylaluminiumchlorid, die mit Wasser in an sich bekannter Weise aktiviert worden war, als Initiator in einem Reaktor gemäß Fig. 7 bei -80°C kontinuierlich polymerisiert. Das Förderorgan (29) war mit jeweils zwei Rotor-Stator-Zahnreihen mit sich verringernden Spaltmassen als Dispergierelemente (33) bestückt im Vergleich nicht. Ein nachgeschalteter Beutelfilter hat die Wirksamkeit der Gelzerkleinerung detektierbar gemacht. Ohne Dispergierlelemente (im Vergleich) waren nach 48 h mehrere 100 g Gel als Filtrat im Beutelfilter, mit Dispergierlelementen verringerte sich die Filtratmasse auf wenige Gramm bei einer Polymerisationszeit von 120 h.

## Patentansprüche

1. Reaktor zur kontinuierlichen Herstellung von Polymeren, insbesondere synthetischen Kautschuken, umfassend zumindest ein im Wesentlichen rohrförmiges Reaktorgehäuse (16) , wobei das Reaktorgehäuse (16) zumindest
• einen Antrieb (38) aufweist, der mit zumindest einem innerhalb des Reaktorgehäuses (16) drehbar angeordneten Schaber oder Wischer (36) verbunden ist und wobei der Schaber oder Wischer (36) mindestens ein Schaber- bzw. Wischerblatt (42) zum Entlanglaufen an einer Innenseite des Reaktorgehäuses (44) aufweist
• zumindest einen Einlass (20)
• zumindest einen Auslass (24)

2. Reaktor nach Anspruch 1, **dadurch gekennzeichnet, dass** er eine Mittelwelle aufweist, die im Wesentlichen entlang der geometrischen Mittelachse (12) angeordnet ist.

3. Reaktor nach Anspruch 1 oder 2, wobei der Auslass (24) derart gestaltet ist, dass die Auslassöffnung (25) im Wesentlichen tangential zur Umlaufrichtung des Antriebs (38) ausgerichtet ist.

4. Reaktor nach Anspruch 3, wobei der Auslass (24) derart gestaltet ist, dass die Querschnittsfläche der Auslassöffnung (25) innerhalb des Reaktorgehäuses (16) mit der geometrischen Mittelachse (12) des Reaktorgehäuses (16) einen Winkel γ von maximal 45°, vorzugsweise maximal 30°, besonders bevorzugt zwischen 0 und 20° und mit dem Radius (11), d.h. der kürzesten Verbindungslinie zwischen der geometrischen Mittelachse und dem im Wesentlichen rohrförmigen Reaktorgehäuse einen Winkel δ von maximal 45°, vorzugsweise maximal 30°, besonders bevorzugt zwischen 0 und 20° einschließt.

5. Reaktor nach Anspruch 3 oder 4, wobei der Auslass (24) so angeordnet ist, dass der geometrische Schwerpunkt der Auslassöffnung (25) in radialer Richtung näher an der äußeren Begrenzung des Antriebs (39) als an der Innenseite des Reaktorgehäuses (44) liegt.

6. Reaktor nach einem der Ansprüche 1 bis 5, **dadurch gekennzeichnet, dass** der Reaktor (10) mit einem externen Umpumpkreislauf (23) ausgeführt ist, wobei der Umpumpkreislauf über einen Kreislaufauslass (27) und einen Kreislaufeinlass (21) mit dem Reaktorgehäuse (16) verbunden ist und wobei der Umpumpkreislauf (23) ein Förderorgan (29) aufweist.

7. Reaktor nach Anspruch 6, **dadurch gekennzeichnet, dass** der Umpumpkreislauf kühlbar ist.

8. Reaktor nach Anspruch 6 oder 7, **dadurch gekennzeichnet, dass** das Förderorgan Dispergierelemente (33), vorzugsweise mindestens eine, vorzugsweise mindestens zwei Rotor-Zahnreihen und mindestens eine, vorzugsweise mindestens zwei Stator-Zahnreihen mit unterschiedlichen, vorzugsweise kleiner werdenden Spaltmaßen aufweist.

9. Reaktor nach einem der Ansprüche 1 bis 8, **dadurch gekennzeichnet, dass** der Reaktor (10) zumindest zwei Einlässe (20) aufweist, wobei der in Strömungsrichtung (22) erste Einlass von einem weiteren Einlass in axialer Richtung mindestens 5 %, vorzugsweise 10 bis 45 % und besonders bevorzugt 10 bis 40 % bezogen auf die axiale Weglänge vom in Strömungsrichtung (22) ersten Einlass bis zum ersten Auslass innerhalb des Reaktorgehäuses (16) entfernt angeordnet ist.

10. Reaktor nach einem der Ansprüche 1 bis 9, **dadurch gekennzeichnet, dass** der Reaktor weiterhin zumindest einen Stator (75) aufweist.

11. Reaktor nach Anspruch 10, **dadurch gekennzeichnet, dass** die Statoren so gestaltet sind, dass sie einen Abstand von der Mittelwelle von 0 oder mehr als 0 bis 2 %, bezogen auf den radialen Durchmesser des Reaktorgehäuses aufweisen.

12. Reaktor nach einem der Ansprüche 2 bis 11, **dadurch gekennzeichnet, dass** er zumindest eine entlang der geometrischen Mittelachse verlaufende Mittelwelle aufweist, die von einem Temperiermedium durchströmt werden kann.

13. Reaktor nach einem der Ansprüche 1 bis 12, **dadurch gekennzeichnet, dass** die Schaber bzw. Wischer so ausgeführt sind, dass der Abstand der Schaber bzw. Wischer zum Reaktorgehäuse 0 oder mehr als 0 bis 2 % bezogen auf den radialen Durchmesser des Reaktorgehäuses beträgt.

14. Reaktor nach einem der Ansprüche 1 bis 13, **dadurch gekennzeichnet, dass** das Reaktorgehäuse (16) mit einer Fördereinrichtung zum Fördern von Edukten in das Reaktorgehäuse (16) und/oder zum Fördern von Produkten aus dem Reaktorgehäuse (16) verbunden ist.

15. Reaktor nach einem der Ansprüche 1 bis 14, **dadurch gekennzeichnet, dass** in axialer Richtung des Reaktorgehäuses (16) mindestens zwei Wärmetauscher (26, 28) zur Einstellung der Temperatur einer innerhalb des Reaktorgehäuses (16) vorgesehenen Strömung angeordnet sind, wobei die Wärmetauscher (26, 28) derart voneinander getrennt sind, dass für jeden Wärmetauscher (26, 28) eine unterschiedliche Temperatur einstellbar ist.

16. Reaktor nach einem der Ansprüche 1 bis 15, **dadurch gekennzeichnet, dass** der Wärmetauscher (26, 28) einen Teil des Reaktorgehäuses (16) umschließenden Außenmantel (30) aufweist und insbesondere zwischen dem Außenmantel (30) und dem Reaktorgehäuse (16) eine spiralförmige Trennwand (32) zur Ausbildung eines spiralförmigen Wärmetauscherkanals (34) angeordnet ist.

17. Reaktor nach einem der Ansprüche 1 bis 16, **dadurch gekennzeichnet, dass** ein Verhältnis einer Innenfläche A des rohrförmigen Reaktorgehäuses (16) zu einem Volumen V des rohrförmigen Reaktorgehäuses (16) 0,1 m²/m³ ≤ A/V ≤ 100 m²/m³ beträgt.

18. Reaktor nach einem der Ansprüche 1 bis 17, **dadurch gekennzeichnet, dass** der Schaber oder Wischer (36) mindestens zwei Teilschaber oder Teilwischer (54) aufweist, wobei die Teilschaber oder Teilwischer (54) in axialer Richtung gelenkig miteinander verbunden sind.

19. Reaktor nach einem der Ansprüche 1 bis 18, **dadurch gekennzeichnet, dass** der Schaber oder Wischer (36) über einen Antrieb (38) antreibbar ist und der Antrieb (38) über eine zwischen dem Antrieb (38) und dem Reaktorgehäuse (16) angeordnete doppeltwirkende Gleitringdichtung abgedichtet ist, wobei die Gleitringdichtung insbesondere ein unter den Polymerisationsbedingungen inertes Sperrmedium enthält.

20. Reaktor nach einem der Ansprüche 1 bis 19, **dadurch gekennzeichnet, dass** das Schaber- bzw. Wischerblatt (42) eine Oberfläche mit einem im Vergleich zu Edelstahl 1.4571 geringeren Reibungskoeffizienten aufweist.

21. Reaktor nach einem der Ansprüche 1 bis 20, **dadurch gekennzeichnet, dass** die Oberflächen im inneren des Reaktorgehäuses (16) so gefertigt oder behandelt sind, dass die Anhaftung von Feststoffen, wie insbesondere synthetischen Kautschuken im Vergleich zu Edelstahl 1.4571 vermindert ist.

22. Reaktor nach einem der Ansprüche 1 bis 21, **dadurch gekennzeichnet, dass** das Schaber- bzw. Wischerblatt (42) zu einer durch die geometrische Mittelachse (12) verlaufenden radial ausgerichteten Linie geneigt und/oder gebogen ist, wobei das Schaber- bzw. Wischerblatt (42) einen nach radial innen ausgerichteten Befestigungskopf (46) aufweist und auf das Schaber- bzw. Wischerblatt (42), insbesondere auf den Befestigungskopf (46), eine nach radial außen gerichtete Kraft, insbesondere Federkraft, aufprägbar ist.

23. Reaktor nach einem der Ansprüche 1 bis 22, **dadurch gekennzeichnet, dass** in axialer Richtung mindestens zwei Schaber- bzw. Wischerblätter (42) angeordnet sind, wobei die Schaber- bzw. Wischerblätter (42) um einen Winkel α in Umfangsrichtung versetzt sind und der Winkel α insbesondere 30° ≤ α ≤ 150°, vorzugsweise 45° ≤ α ≤ 135°, weiter bevorzugt 60° ≤ α ≤ 120° und besonders bevorzugt α = 90°±2° beträgt.

24. Reaktor nach einem der Ansprüche 1 bis 23, **dadurch gekennzeichnet, dass** der Rohrreaktor stromaufwärts mit zumindest einer Mischkammer (72) verbunden ist, die ein die Mischkammer umschließendes Gehäuse und zumindest ein innerhalb der Mischkammer angeordnetes Mischelement (70) aufweist.

25. Reaktor nach Anspruch 24, **dadurch gekennzeichnet, dass** das Mischelement (70) ein Impeller ist.

26. Reaktor nach einem der Ansprüche 1 bis 25, **dadurch gekennzeichnet, dass** die Schaber bzw. Wischer (36) und gegebenenfalls vorhandenen Statoren (75) so ausgeführt sind, dass eine Redispergierung des abgeschabten oder abgewischten Materials begünstigt wird.

27. Reaktor nach einem der Ansprüche 1 bis 26, **dadurch gekennzeichnet, dass** der zumindest eine Auslass (24) mit Dispergierelementen (33) ausgestaltet ist.

28. Verwendung eines Reaktors nach einem der Ansprüche 1 bis 27 zur Polymerisation von polymerisierbaren Monomeren.

29. Verwendung nach Anspruch 28, **dadurch gekennzeichnet, dass** die Polymere synthetische Kautschuke sind.

30. Verfahren zur kontinuierlichen Herstellung von Polymeren durch Polymerisation von polymerisierbaren Monomeren, **dadurch gekennzeichnet, dass** die Polymerisation in einem Reaktor nach einem der Ansprüche 1 bis 27 durchgeführt wird.

31. Verfahren nach Anspruch 30, **dadurch gekennzeichnet, dass** in einem Reaktor (10) nach einem der Ansprüche 1 bis 27
• im Wesentlichen eine in axialer Richtung verlaufende Kolbenströmung der Edukte und der Produkte aufgeprägt wird oder
• im Wesentlichen eine Umlaufströmung oder Schlaufenströmung der Edukte
und der Produkte aufgeprägt wird und
bei der Polymerisation sich an einer Innenseite (44) eines Reaktorgehäuses (16) des Rohrreaktors (10) gegebenenfalls ablagernde Feststoffe oder Gele mechanisch entfernt werden.

32. Verfahren nach einem der Ansprüche 30 oder 31, bei dem in Strömungsrichtung unterschiedliche Wärmetauschertemperaturen zur Einstellung eines vordefinierten Molekulargewichts unter Berücksichtigung der bei der Polymerisation auftretenden Wärmebilanzen, Verweilzeiten und Konzentrationen aufgeprägt werden.

33. Verfahren nach einem der Ansprüche 30 bis 32, bei dem das mechanische Entfernen von gegebenenfalls abgelagerten Feststoffen oder Gelen mit einer Geschwindigkeit v an der Innenseite (44) des Reaktorgehäuses (16) von 0,05 m/s ≤ v ≤10 m/s erfolgt.

34. Verfahren nach einem der Ansprüche 30 bis 33, **dadurch gekennzeichnet, dass** die Edukte vor dem Eintritt in den Reaktor (10) in einer Mischkammer (72) durch ein Mischelement (70) mit einer Mischenergie von 0,001 bis 120 J/l durchmischt werden.

35. Verfahren nach einem der Ansprüche 30 bis 34, **dadurch gekennzeichnet dass** in einem Reaktor (10) nach einem der Ansprüche 8 bis 27 bei der Herstellung von Polymeren durch Polymerisation von polymerisierbaren Monomeren anfallende Feststoffe oder Gele auf Partikelgrößen von weniger als 1 mm, besonders bevorzugt von weniger als 0,1 mm zerkleinert werden.

36. Verfahren nach einem der Ansprüche 30 bis 35, **dadurch gekennzeichnet, dass** synthetische Kautschuke hergestellt werden.
